# EUROPEAN PATENT APPLICATION

(11) **EP 4 753 328 A1**
(43) Date of publication of application: **03.06.2026**
(21) Application number: 24855641.7
(22) Date of filing: 12.08.2024
(51) Int. Cl.: H04W 36/00

(54) **COMMUNICATION METHOD AND APPARATUS, AND COMPUTER READABLE STORAGE MEDIUM**

(30) Priority: 18.08.2023 CN 202311051086
(71) Applicant: HUAWEI TECHNOLOGIES CO., LTD., Shenzhen 518129 (CN)
(72) Inventor: WANG, Chuang, Chengdu, Sichuan 611756 (CN); FANG, Xuming, Chengdu, Sichuan 611756 (CN); HE, Rong, Chengdu, Sichuan 611756 (CN); DU, Rui, Shenzhen, Guangdong 518129 (CN)
(74) Representative: Maiwald GmbH
(86) International application number: PCT/CN2024/111432
(87) International publication number: WO 2025/039915

(57) **Abstract**

Embodiments of this application relate to the communication field, and in particular, to a communication method and apparatus, and a computer-readable storage medium, which are applicable to a sensing (sensing) system, and also applicable to a system that complies with IEEE 802.11 system standards, for example, 802.11bf, 802.11ax, 802.11be, or a next-generation standard, or to a wireless personal area network system based on ultra-wideband UWB, or the like. The method includes: A first device obtains first information, where the first information includes sensing information of at least one third device capable of performing sensing switching with a second device; and the first device sends the first information to the second device. According to the communication method in embodiments of this application, efficiency of a sensing switching process can be improved.

## Description

This application claims priority to Chinese Patent Application No. 202311051086.6, filed with the China National Intellectual Property Administration on August 18, 2023 and entitled "COMMUNICATION METHOD AND APPARATUS, AND COMPUTER-READABLE STORAGE MEDIUM", which is incorporated herein by reference in its entirety.

### TECHNICAL FIELD

This application relates to the field of wireless communication technologies, and in particular, to a communication method and apparatus, and a computer-readable storage medium.

### BACKGROUND

In a wireless local area network (wireless local area network, WLAN) sensing (sensing) switching technology, a station (station, STA) may obtain information about a nearby access point (access point, AP) by listening to a beacon (beacon) frame through passive scanning or sending a probe request (probe request) frame through active scanning.

As a sensed/measured target moves, precision of sensing measurement of the sensed target by an original sensing node decreases, or even an interruption of sensing measurement is caused. In this case, passively listening to a beacon frame sent by a nearby AP or actively receiving a probe response (probe response) frame from a nearby AP, and performing sensing switching solely based on a sensing capability and signal strength of the nearby AP, may cause the sensed/measured target to be out of a sensing measurement range of an existing sensing measurement node. When the sensed/measured target is out of a sensing measurement range of an AP, the AP cannot continue to perform sensing measurement on the sensed target. In this scenario, the STA re-probes and rescans nearby nodes. This reduces efficiency of a sensing switching process.

### SUMMARY

Embodiments of this application provide a communication method and apparatus, and a computer-readable storage medium to improve efficiency of a sensing switching process.

According to a first aspect, an embodiment of this application provides a communication method. The communication method may be applied to a first device, or may be applied to a module (for example, a chip or a processor) in a first device, or may be applied to a logical module or software that can implement all or some functions of a first device. The following uses an example in which the method is performed by the first device for description. The communication method includes: The first device obtains first information, where the first information includes sensing information of at least one third device capable of performing sensing switching with a second device; and the first device sends the first information to the second device.

In this embodiment of this application, in a WLAN sensing process, multi-device collaboration may be used to implement sensing switching and simplify probing and scanning procedures. For example, when detecting a decrease in sensing precision, the first device may exchange information with devices in a device collaboration set, to obtain information about devices surrounding the second device and suggest a switchable device (for example, the first information) in the device collaboration set to the second device, so that a device in the device collaboration set can be autonomously selected for switching, thereby improving efficiency of a sensing switching process. In addition, the second device can select, based on the first information, a device with a relatively good sensing measurement result to perform sensing measurement, thereby improving quality of sensing switching.

In a possible implementation, the sensing information includes at least one of a basic service set identifier (basic service set identifier, BSSID) of the third device, operating channel information, and whether the third device has a sensing capability.

In a possible implementation, that the first device obtains the first information includes: The first device sends a first frame to the third device, where the first frame is used to request sensing switching of the second device; and the first device receives a second frame from the third device, where the second frame is a response to the first frame, and the second frame includes sensing information of the third device.

In a possible implementation, the first frame is a sensing switch request frame, and the sensing switch request frame includes at least one of identification information of the second device, a time for a sensing switch procedure, and the third device serving as a responder or an initiator in a new round of sensing measurement after sensing switching.

In a possible implementation, the sensing switch request frame includes a first sensing switch parameters element field, the first sensing switch parameters element field includes a sensing switch identifier field, and the sensing switch identifier field includes the identification information of the second device.

In a possible implementation, the second frame is a sensing switch response frame, and the sensing switch response frame includes at least one of sensing switch success or failure, the sensing information of the third device, location information of the third device, the time for the sensing switching procedure, and the third device serving as a responder or an initiator in a new round of sensing measurement after sensing switching.

In a possible implementation, the sensing switch response frame includes a status code field, and the status code field indicates sensing switch success or failure.

In a possible implementation, when the status code field indicates sensing switch success, the sensing switch response frame further includes a second sensing switch parameters element field, and the second sensing switch parameters element field includes at least one of the sensing information of the third device and the location information of the third device.

In a possible implementation, the second sensing switch parameters element field further includes at least one of a location information field and a neighbor report element field, where the location information field includes the location information of the third device, and the neighbor report element field includes the sensing information of the third device.

In a possible implementation, the first sensing switch parameters element field or the second sensing switch parameters element field further includes a sensing switch parameters control field, and the sensing switch parameters control field includes at least one of a sensing switch procedure expiry exponent subfield and a sensing responder subfield, where the sensing switch procedure expiry exponent subfield includes the time for the sensing switch procedure, and the sensing responder subfield indicates that the third device serves as the responder or the initiator in the new round of sensing measurement after sensing switching.

In a possible implementation, that the first device sends the first information to the second device includes: The first device sends a third frame to the second device, where the third frame includes the first information.

In a possible implementation, the third frame is a sensing suggestion request frame, and the sensing suggestion request frame includes at least one of the location information of the third device, whether the third device enables multi-link sensing, the sensing information of the third device, the third device serving as a responder or an initiator in a new round of sensing measurement after sensing switching, and the number of suggested third devices capable of performing sensing switching with the second device.

In a possible implementation, the sensing suggestion request frame includes a sensing suggestion parameters element field, the sensing suggestion parameters element field includes a suggested sensing device's information field, and the suggested sensing device's information field includes at least one of a location information field, an enable multi-link operation (multi-link operation, MLO) and multi-link device (multi-link device, MLD) parameters field, and a neighbor report element field, where the location information field includes the location information of the third device, the enable MLO and MLD parameters field includes whether the third device enables multi-link sensing, and the neighbor report element field includes the sensing information of the third device.

In a possible implementation, the method further includes: The first device receives a fourth frame from the second device, where the fourth frame is a response to the third frame, and the fourth frame includes at least one of status indication information, the location information of the third device, whether the third device enables multi-link sensing, the sensing information of the third device, the third device serving as a responder or an initiator in a new round of sensing measurement after sensing switching, and the number of suggested third devices capable of performing sensing switching with the second device, where the status indication information indicates whether the second device successfully receives the first information.

In a possible implementation, the fourth frame is a sensing suggestion response frame, the sensing suggestion response frame includes a status code field, and the status code field includes the status indication information.

In a possible implementation, when the status indication information indicates that the second device successfully receives the first information, the sensing suggestion response frame further includes a sensing suggestion parameters element field, the sensing suggestion parameters element field includes a suggested sensing device's information field, and the suggested sensing device's information field includes at least one of a location information field, an enable MLO and MLD parameters field, and a neighbor report element field, where the location information field includes the location information of the third device, the enable MLO and MLD parameters field includes whether the third device enables multi-link sensing, and the neighbor report element field includes the sensing information of the third device.

In a possible implementation, the sensing suggestion parameters element field further includes a sensing suggestion parameters control field, and the sensing suggestion parameters control field includes at least one of a sensing responder subfield and a number of suggested devices subfield, where the sensing responder subfield includes the third device serving as a responder or an initiator in a new round of sensing measurement after sensing switching, and the number of suggested devices subfield includes the number of suggested third devices capable of performing sensing switching with the second device.

In a possible implementation, the first frame further includes a first sensing measurement parameter.

In a possible implementation, when the third device does not accept the first sensing measurement parameter, the second frame further includes a sensing measurement parameters field, the sensing measurement parameters field includes a second sensing measurement parameter, and the second sensing measurement parameter is determined by the third device.

In a possible implementation, the first information further includes a sensing measurement parameter of the third device.

In a possible implementation, the fourth frame further includes a measurement session identifier indication field, and the measurement session identifier indication field indicates a session for performing measurement with the third device.

According to a second aspect, an embodiment of this application provides a communication method. The communication method may be applied to a second device, or may be applied to a module (for example, a chip or a processor) in a second device, or may be applied to a logical module or software that can implement all or some functions of a second device. The following uses an example in which the method is performed by the second device for description. The communication method includes: The second device receives first information from a first device, where the first information includes sensing information of at least one third device capable of performing sensing switching with the second device; and the second device determines, based on the first information, a target device for sensing switching.

In this embodiment of this application, on a basis of implementing sensing switching by using multi-device collaboration, sensing measurement parameters may be further exchanged in a sensing switch phase, so that the second device and the third device subsequently perform a sensing measurement session procedure. This can not only improve efficiency of a sensing switching process, but also improve efficiency of sensing measurement because the second device can select, based on the first information, a device with a relatively good sensing measurement result to perform sensing measurement, thereby improving quality of sensing switching.

It should be understood that an execution body of the second aspect may be a network device, and specific content of the second aspect corresponds to content of the first aspect. For corresponding features of the second aspect and beneficial effects achieved in the second aspect, refer to descriptions of the first aspect. To avoid repetition, detailed descriptions are properly omitted herein.

In a possible implementation, the sensing information includes at least one of a BSSID of the third device, operating channel information, and whether the third device has a sensing capability.

In a possible implementation, that the second device receives the first information from the first device includes: the second device receives a third frame from the first device, where the third frame includes the first information.

In a possible implementation, the third frame is a sensing suggestion request frame, and the sensing suggestion request frame includes at least one of location information of the third device, whether the third device enables multi-link sensing, sensing information of the third device, the third device serving as a responder or an initiator in a new round of sensing measurement after sensing switching, and the number of suggested third devices capable of performing sensing switching with the second device.

In a possible implementation, the sensing suggestion request frame includes a sensing suggestion parameters element field, the sensing suggestion parameters element field includes a suggested sensing device's information field, and the suggested sensing device's information field includes at least one of a location information field, an enable MLO and MLD parameters field, and a neighbor report element field, where the location information field includes the location information of the third device, the enable MLO and MLD parameters field includes whether the third device enables multi-link sensing, and the neighbor report element field includes the sensing information of the third device.

In a possible implementation, the method further includes: The second device sends a fourth frame to the first device, where the fourth frame is a response to the third frame, and the fourth frame includes at least one of status indication information, the location information of the third device, whether the third device enables multi-link sensing, the sensing information of the third device, the third device serving as a responder or an initiator in a new round of sensing measurement after sensing switching, and the number of suggested third devices capable of performing sensing switching with the second device, where the status indication information indicates whether the second device successfully receives the first information.

In a possible implementation, the fourth frame is a sensing suggestion response frame, the sensing suggestion response frame includes a status code field, and the status code field includes the status indication information.

In a possible implementation, when the status indication information indicates that the second device successfully receives the first information, the sensing suggestion response frame further includes a sensing suggestion parameters element field, the sensing suggestion parameters element field includes a suggested sensing device's information field, and the suggested sensing device's information field includes at least one of a location information field, an enable MLO and MLD parameters field, and a neighbor report element field, where the location information field includes the location information of the third device, the enable MLO and MLD parameters field includes whether the third device enables multi-link sensing, and the neighbor report element field includes the sensing information of the third device.

In a possible implementation, the sensing suggestion parameters element field further includes a sensing suggestion parameters control field, and the sensing suggestion parameters control field includes at least one of a sensing responder subfield and a number of suggested devices subfield, where the sensing responder subfield includes the third device serving as a responder or an initiator in a new round of sensing measurement after sensing switching, and the number of suggested devices subfield includes the number of suggested third devices capable of performing sensing switching with the second device.

In a possible implementation, the first information further includes a sensing measurement parameter of the third device.

In a possible implementation, the fourth frame further includes a measurement session identifier indication field, and the measurement session identifier indication field indicates a session for performing measurement with the third device.

According to a third aspect, an embodiment of this application provides a communication apparatus. The communication apparatus may be applied to a first device, a module (for example, a chip or a processor) in a first device, or a logical module or software that can implement all or some functions of a first device. The communication apparatus has a function of implementing behavior in the first aspect or any one of the method examples of the first aspect. The functions may be implemented by hardware, or may be implemented by hardware by executing corresponding software. The hardware or the software includes one or more modules corresponding to the foregoing function. For beneficial effects, refer to the descriptions of the first aspect. Details are not described herein again.

According to a fourth aspect, an embodiment of this application provides a communication apparatus. The communication apparatus may be applied to a second device, a module (for example, a chip or a processor) in a second device, or a logical module or software that can implement all or some functions of a second device. The communication apparatus has a function of implementing behavior in the second aspect or any one of the method examples of the second aspect. The functions may be implemented by hardware, or may be implemented by hardware by executing corresponding software. The hardware or the software includes one or more modules corresponding to the foregoing function. For beneficial effects, refer to the descriptions of the second aspect. Details are not described herein again.

According to a fifth aspect, an embodiment of this application provides a communication apparatus. The communication apparatus may be the first device in the foregoing method embodiments, or a chip or a processor disposed in the first device. The communication apparatus may include a processor. The processor is coupled to a memory. The memory is configured to store a program or instructions. When the program or the instructions are executed by the processor, the communication apparatus is caused to perform the method performed by the first device, or the chip or the processor in the first device in the foregoing method embodiments.

According to a sixth aspect, an embodiment of this application provides a communication apparatus. The communication apparatus may be the first device in the foregoing method embodiments, or a chip or a processor disposed in the first device. The communication apparatus may include a processor. The processor is coupled to a memory. The memory is configured to store a program or instructions. When the program or the instructions are executed by the processor, the communication apparatus is caused to perform the method performed by the first device, or the chip or the processor in the first device in the foregoing method embodiments.

According to a seventh aspect, an embodiment of this application provides a computer-readable storage medium. The computer-readable storage medium stores a computer program or computer instructions. When the computer program or the computer instructions are run on a computer, the computer is caused to perform the method according to any one of the first aspect or the possible implementations of the first aspect, or any one of the second aspect or the possible implementations of the second aspect.

According to an eighth aspect, an embodiment of this application provides a computer program product including program instructions. When the program instructions are run on a computer, the computer is caused to perform the method according to any one of the first aspect or the possible implementations of the first aspect, or any one of the second aspect or the possible implementations of the second aspect.

According to a ninth aspect, an embodiment of this application provides a chip system. The chip system includes a processor, configured to implement functions in the foregoing methods. In a possible implementation, the chip system may further include a memory, configured to store program instructions and/or data. The chip system may include a chip, or may include a chip and another discrete component.

According to a tenth aspect, an embodiment of this application provides a communication system. The communication system includes a first device and a second device. The first device is configured to perform the method in any one of the first aspect or the possible implementations of the first aspect. The second device is configured to perform the method in any one of the second aspect or the possible implementations of the second aspect.

### BRIEF DESCRIPTION OF DRAWINGS

To describe embodiments of this application more clearly, the following briefly describes accompanying drawings used in the embodiments. It is clear that persons of ordinary skill in the art can further obtain other drawings based on these accompanying drawings without creative efforts.
FIG. 1 is a diagram of a network architecture according to an embodiment of this application;
FIG. 2 is a diagram of a sensing procedure for rescanning nearby nodes according to an embodiment of this application;
FIG. 3 is a diagram of an SBP procedure according to an embodiment of this application;
FIG. 4 is an interaction flowchart of a communication method according to an embodiment of this application;
FIG. 5 is a flowchart of signaling between devices according to an embodiment of this application;
FIG. 6 is a diagram of a structure of a sensing switch request frame according to an embodiment of this application;
FIG. 7 is a diagram of a structure of a sensing switch response frame according to an embodiment of this application;
FIG. 8 is another flowchart of signaling between devices according to an embodiment of this application;
FIG. 9 is a diagram of a structure of a sensing suggestion request frame according to an embodiment of this application;
FIG. 10 is a diagram of a structure of a suggested sensing device's information field according to an embodiment of this application;
FIG. 11 is a diagram of a structure of an enable MLO and MLD parameters field according to an embodiment of this application;
FIG. 12 is a diagram of a structure of a sensing suggestion response frame according to an embodiment of this application;
FIG. 13 and FIG. 14 are other flowcharts of signaling between devices according to an embodiment of this application;
FIG. 15 is a diagram of a structure of a sensing switch measurement request frame according to an embodiment of this application;
FIG. 16 is a diagram of a structure of a sensing switch measurement response frame according to an embodiment of this application;
FIG. 17 is a diagram of a structure of another suggested sensing device's information field according to an embodiment of this application;
FIG. 18 is a diagram of a structure of another sensing suggestion response frame according to an embodiment of this application;
FIG. 19 is a diagram of a structure of a communication apparatus according to an embodiment of this application;
FIG. 20 is a diagram of a structure of another communication apparatus according to an embodiment of this application; and
FIG. 21 is a diagram of a structure of still another communication apparatus according to an embodiment of this application.

### DESCRIPTION OF EMBODIMENTS

The following describes the technical solutions in embodiments of this application with reference to the accompanying drawings in embodiments of this application. The terms "system" and "network" in embodiments of this application may be used interchangeably. Unless otherwise specified, the character "/" represents an "or" relationship between associated objects. For example, A/B may represent A or B. The term "and/or" in this application describes only an association relationship between associated objects and represents that three relationships may exist. For example, A and/or B may represent the following three cases: Only A exists, both A and B exist, and only B exists, where A and B may be singular or plural. In addition, in the descriptions of this application, "a plurality of" means two or more, unless otherwise specified. The term "at least one of the following items (pieces)" or an expression similar to the term indicates any combination of these items, including a single item (piece) or any combination of a plurality of items (pieces). For example, at least one item (piece) of a, b, or c may represent a, b, c, a and b, a and c, b and c, or a and b and c. Herein, a, b, and c may be singular or plural. In addition, to clearly describe the technical solutions in embodiments of this application, terms such as "first" and "second" are used in embodiments of this application to distinguish between network elements and same or similar items having basically same functions. Persons skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily refer to a same embodiment, but mean "one or more but not all embodiments", unless otherwise specially emphasized in another manner. The terms "comprise", "include", "have", and variants thereof all mean "including but not limited to", unless otherwise specially emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

The following first describes technical terms that may appear in embodiments of this application. Terms used in implementations of this application are merely used to explain specific embodiments of this application, but are not intended to limit this application. In various embodiments of this application, unless otherwise specified or there is a logic conflict, terms and/or descriptions in different embodiments are consistent and may be mutually referenced, and technical features in different embodiments may be combined into a new embodiment based on an internal logical relationship thereof.

### (1) Sensing

Sensing initiator (sensing initiator): a station that initiates a sensing procedure.

Sensing responder (sensing responder): a station that participates in the sensing procedure initiated by the sensing initiator.

Sensing-by-proxy initiator (SBP initiator): a station that initiates a sensing-by-proxy procedure.

Sensing-by-proxy responder (SBP responder): a station that participates in the sensing-by-proxy procedure initiated by the sensing-by-proxy initiator and also serves as a sensing initiator in the sensing procedure.

### (2) Sensing by proxy (sensing by proxy, SBP)

Sensing by proxy means that a non-AP STA can request an AP to perform WLAN sensing and enable the AP to feed back a sensing result. The non-AP STA that initiates an SBP procedure is referred to as an SBP initiator. The AP that serves as a proxy (proxy) and participates in the SBP is referred to as an SBP responder. In addition, the AP is also a sensing initiator of an SBP sensing procedure.

In the IEEE 802.11bf protocol, an SBP procedure performed on a sub-7 GHz frequency band may include four phases:
SBP setup (SBP setup) phase: An SBP initiator sends an SBP request (SBP request) frame to an SBP responder. The frame may include a configuration parameter related to the SBP procedure. After receiving the SBP request frame, the SBP responder may send an SBP response frame to the SBP initiator. If the configuration parameter meets setting of the SBP responder, the SBP response frame may indicate that an SBP request is accepted and SBP is successfully established. Otherwise, the SBP response frame may indicate that the SBP request is rejected and the SBP fails to be established.

Sensing measurement phase: After the SBP is successfully established, the SBP responder, as a sensing initiator, initiates a sensing procedure to one or more sensing responders. The sensing procedure includes a sensing measurement setup (sensing measurement setup) phase and a sensing measurement instance (sensing measurement instance) phase. The sensing measurement setup phase includes: The sensing initiator sends a DMG measurement setup request frame to the sensing responder, and the sensing responder sends a DMG measurement setup response frame to the sensing initiator. The sensing measurement performed on the sub-7 GHz frequency band may be trigger-based (trigger-based, TB) sensing measurement.

SBP reporting (SBP reporting) phase: After obtaining a sensing measurement result, the SBP responder feeds back the result to the SBP initiator through an SBP report frame.

SBP termination (SBP termination) phase: The SBP can be terminated by either the SBP initiator or the SBP responder by sending an SBP termination frame.

It should be understood that embodiments of this application are applicable to a sensing (sensing) system, also applicable to a system that complies with IEEE 802.11 system standards, for example, 802.11bf, 802.11ax, 802.11be, or a next-generation standard, for example, a wireless local area network system supporting 802.11 series protocols such as Wi-Fi 8, UHR, or Wi-Fi AI, or a wireless personal area network system based on ultra-wideband UWB, and also applicable to a wireless local area network (wireless local area network, WLAN) scenario. Alternatively, embodiments of this application are applicable to a wireless local area network system such as an Internet of Things (Internet of Things, IoT) network or a vehicle to everything (vehicle to X, V2X) network. Certainly, embodiments of this application are also applicable to other possible communication systems, for example, a 5G communication system and a subsequently evolved cellular communication system.

The following uses an example in which embodiments of this application are applicable to a WLAN scenario. It should be understood that, starting from the 802.11a/g standard, the WLAN has evolved through 802.11n, 802.11ac, and 802.11ax, to 802.11 be and Wi-Fi 8 that are currently being discussed. 802.11n may also be referred to as high throughput (high throughput, HT), 802.11ac may also be referred to as very high throughput (very high throughput, VHT), 802.11ax may also be referred to as high efficiency (high efficient, HE) or Wi-Fi 6, and 802.11be may also be referred to as extremely high throughput (extremely high throughput, EHT) or Wi-Fi 7. Standards before HT, such as 802.11a/b/g, are collectively referred to as non-high throughput (non-HT).

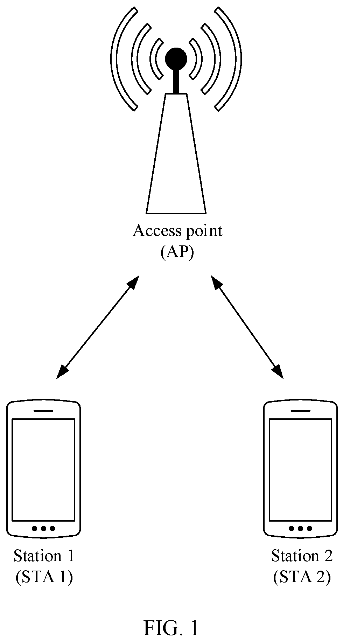

FIG. 1 is a diagram of a network architecture according to an embodiment of this application. As shown in FIG. 1, an example in which a network architecture includes one wireless access point AP and two stations is used for description. A STA associated with the AP can receive a radio frame sent by the AP, and can also send a radio frame to the AP. In addition, embodiments of this application are also applicable to communication between APs. For example, the APs may communicate with each other by using a distributed system (distributed system, DS). Embodiments of this application are also applicable to communication between STAs. It should be understood that quantities of APs and STAs in FIG. 1 are merely an example. There may be more or fewer APs and STAs.

The STA in embodiments of this application is an apparatus having a wireless communication function, supports communication based on a WLAN protocol, and has a capability of communicating with another station or the access point in the WLAN network. In the WLAN system, the station may be referred to as a non-access point station (non-access point station, non-AP STA). For example, the STA is any user communication device that allows a user to communicate with the AP and further communicate with the WLAN. The apparatus may be an entire device, or may be a chip or a processing system installed in the entire device. The device in which the chip or the processing system is installed may implement the method and the function in embodiments of this application under control of the chip or the processing system. For example, the STAs may be various user terminals, user apparatuses, access apparatuses, subscriber stations, subscriber units, mobile stations, user agents, user devices, or other names that have a wireless communication function. The user terminals may include various handheld devices, vehicle-mounted devices, wearable devices, computing devices, or other processing devices connected to a wireless modem that have a wireless communication function; and various forms of user equipment (user equipment, UE), mobile stations (mobile station, MS), terminals (terminal), terminal equipment (terminal equipment), portable communication devices, handheld devices, portable computing devices, entertainment devices, game devices or systems, global positioning system devices, any other suitable device configured to perform network communication through a wireless medium, or the like. For example, the STA may be a router, a switch, a bridge, or the like. Herein, for ease of description, the devices mentioned above are collectively referred to as stations or STAs.

The access point (for example, an AP) in embodiments of this application is an apparatus having a wireless communication function, supports communication based on a WLAN protocol, has a function of communicating with another device (for example, a station or another access point) in the WLAN network, and certainly, may further have a function of communicating with another device. In the WLAN system, the access point may be referred to as an access point station (AP STA). The apparatus may be an entire device, or may be a chip or a processing system installed in the entire device. The device in which the chip or the processing system is installed may implement the method and function in embodiments of this application under control of the chip or the processing system. The AP in embodiments of this application may be an apparatus that provides a service for the STA, and may support 802.11 series protocols. For example, the AP may be a communication entity such as a communication server, a router, a switch, or a bridge. The AP may include a macro base station, a micro base station, a relay station, and the like in various forms. Certainly, the AP may alternatively be a chip or a processing system in these devices in various forms, to implement the method and function in embodiments of this application.

The AP and the STA in embodiments of this application may be an AP and a STA to which the IEEE 802.11 system standard is applicable. The AP is an apparatus that is deployed in a wireless communication network and that provides a wireless communication function for a STA associated with the AP. The AP may be used as a center of the communication system, and is usually a network-side product that supports MAC and PHY in the 802.11 system standard, for example, may be a communication device such as a base station, a router, a gateway, a relay, a communication server, a switch, or a bridge. The base station may include a macro base station, a micro base station, a relay station, or the like in various forms. Herein, for ease of description, the devices mentioned above are collectively referred to as APs. The STA is usually a terminal product that supports a medium access control (medium access control, MAC) layer and a physical (physical, PHY) layer in the 802.11 system standard, for example, a mobile phone or a notebook computer.

The WLAN system can provide high-speed and low-latency transmission. With continuous evolution of WLAN application scenarios, the WLAN system is applied to more scenarios or industries, for example, the Internet of Things industry, the vehicle to X industry, the banking industry, enterprise offices, exhibition halls of stadiums, concert halls, hotel rooms, dormitories, wards, classrooms, supermarkets, squares, streets, production workshops, and warehousing. Certainly, a device supporting WLAN communication (for example, an access point or a station) may be a sensor node (for example, a smart water meter, a smart electric meter, or a smart air detection node) in a smart city, a smart device (for example, a smart camera, a projector, a display, a television, a speaker, a refrigerator, or a washing machine) in a smart home, a node or an entertainment terminal (for example, a wearable device such as an AR device or a VR device) in the Internet of Things, a smart device (for example, a printer, a projector, a loudspeaker, or a speaker) in a smart office, a vehicle to X device in the vehicle to X, an infrastructure (for example, a vending machine, a self-service navigation desk of a supermarket, a self-service cashier, or a self-service meal-ordering machine) in a daily life scenario, a device in a large-scale stadium and a music hall, or the like. Specific forms of the STA and the AP are not specifically limited in embodiments of this application, and are merely examples for description herein.

In a WLAN sensing scenario, movement of a sensed or measured target may cause a decrease in precision of sensing measurement of the sensed target by an original sensing node, a degradation in sensing quality, or even an interruption of sensing measurement. Alternatively, during movement of a STA, precision of sensing measurement of a sensed target by an original sensing node may decrease, sensing quality may be degraded, or even sensing measurement may be interrupted.

To resolve a problem that communication quality is degraded, currently, implementation of sensing switching includes a plurality of technical solutions, and the following illustrates three solutions.

### Solution 1: Re-probing and rescanning nearby nodes

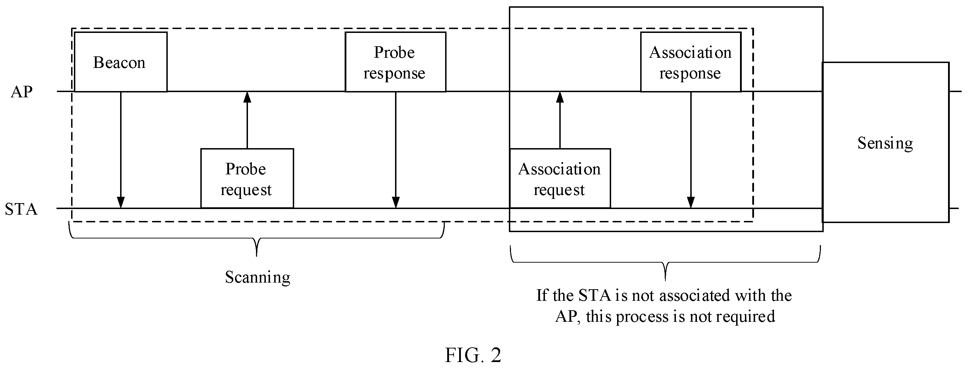

FIG. 2 is a diagram of a sensing procedure for rescanning nearby nodes according to an embodiment of this application. As shown in FIG. 2, a STA re-probes and rescans a nearby AP by using a probe request/response (probe request/probe response) with the nearby AP, and sensing measurement on a sensed target is performed again with a new AP.

Disadvantage of the solution 1: In a movement process of the STA or the sensed/measured target, the STA autonomously selects and switches to a nearby AP with higher signal strength. This AP switching mode results in relatively high latency.

### Solution 2: Fast transition (fast transition, FT) mechanism

A STA may switch from a current AP to a target AP by using an FT mechanism. The FT mechanism may include an over-the-air FT mechanism and an over-the-DS FT mechanism.

Disadvantage of the solution 2: Compared with the solution 1, the solution 2 can simplify procedures such as authentication and handshaking in a communication switching process, thereby improving communication switching efficiency. Although the solution 2 resolves a problem of excessively high latency during switching of a mobile STA between APs, in a scenario in which both a STA and an AP change and communication quality between the STA and the AP is stable, as a sensed/measured target moves, precision of sensing measurement of the sensed target by an original sensing node also decreases in the existing FT mechanism, and even an interruption of sensing measurement is caused.

### Solution 3: Sensing by proxy (sensing by proxy, SBP)

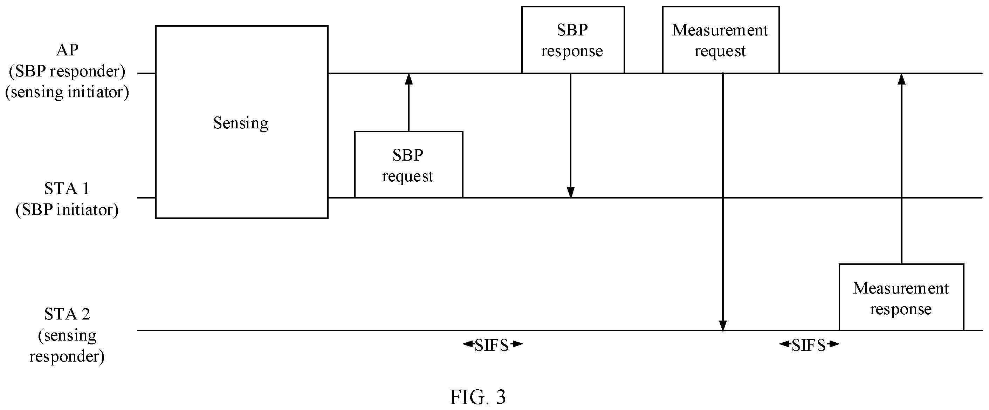

FIG. 3 is a diagram of an SBP procedure according to an embodiment of this application. When precision of sensing measurement of a sensed target by a STA and an AP decreases, the STA may request the AP to perform sensing measurement with another SAT within a sensing range. As shown in FIG. 3, by exchanging an SBP request/response (request/response) frame with an AP, a STA 1 requests the AP to perform SBP. The STA 1 serves as an SBP initiator, and the AP serves as an SBP responder. After responding to the SBP request frame sent by the STA 1, the AP searches for a STA 2 in a BBS and completes a sensing (sensing) operation with the STA 2.

Disadvantage of the solution 3: When the sensed/measured target is out of a sensing measurement range of the AP, the SBP solution cannot be used to continue to perform sensing measurement on the sensed target. In addition, in a sensing process of the AP and the STA 1, when precision of sensing measurement decreases and the AP does not support SBP, the STA can only rescan other nearby sensing nodes, resulting in an excessively long sensing switching time, a loss of a sensing measurement target, and other problems.

Therefore, a technical problem to be resolved by this application may be how to improve efficiency of a sensing switching process.

Based on the foregoing descriptions, this application provides a communication method. The following describes the communication method by using various embodiments separately. Some of these communication methods are intended only for some procedures in sensing switching, and some may be applied to any one or more procedures in sensing switching. It should be understood that these communication methods may be used in combination with each other. For example, one method may be used in a procedure in sensing switching, but another method may be used in another procedure, or both one method and another method may be used in a procedure in sensing switching.

It should be understood that sensing switching may change with evolution of the technical solutions, and the technical solutions provided in this application are not limited to the processes described below. Further, descriptions of scenarios in embodiments of this application are merely examples, and the solutions in embodiments of this application are not limited to being applicable to only the described scenarios, and are also applicable to a scenario with a similar problem.

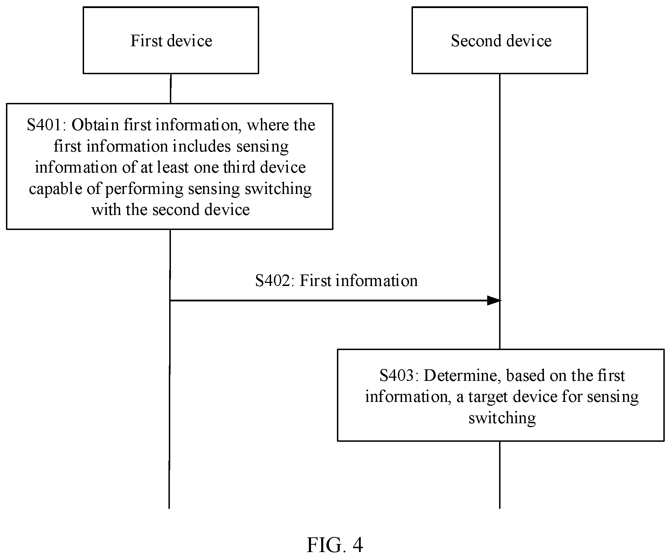

The following describes a communication method provided in an embodiment of this application. FIG. 4 is an interaction flowchart of a communication method according to an embodiment of this application. In FIG. 4, the method is illustrated by using an example in which a first device and a second device are execution bodies of an interaction diagram. However, the execution bodies of the interaction diagram are not limited in this application. For example, the first device in FIG. 4 may be a chip, a chip system, or a processor that supports the first device in implementing the method, or may be a logical module or software that can implement all or some functions of the first device. The second device in FIG. 4 may also be a chip, a chip system, or a processor that supports the second device in implementing the method, or may be a logical module or software that can implement all or some functions of the second device. The first device and a third device may be APs, and the second device may be a STA. As shown in FIG. 4, the communication method includes but is not limited to the following steps.

S401: The first device obtains first information, where the first information includes sensing information of at least one third device capable of performing sensing switching with the second device.

In a wireless sensing process, if it is learned that sensing precision decreases, the first device may obtain the first information, for example, obtain the first information from the third device. The first information includes the sensing information of the at least one third device capable of performing sensing switching with the second device. The sensing information of the third device includes at least one of a BSSID of the third device, location information, and whether the third device has a sensing capability. In a possible implementation, the sensing information of the third device may further include location information and whether to enable a multi-link operation.

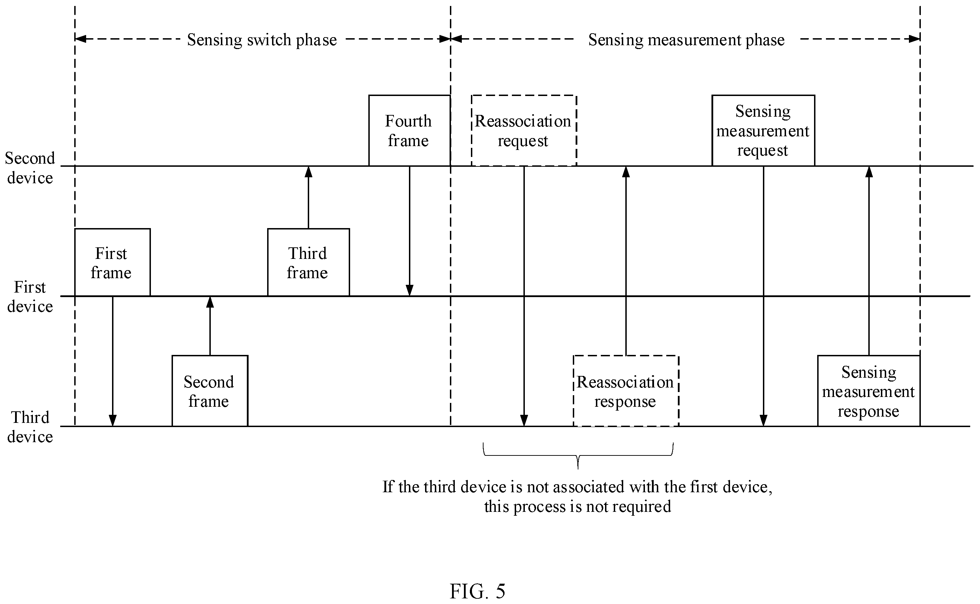

A specific implementation in which the first device obtains the first information may be as follows:
In a first possible implementation, the first device may obtain the first information from the third device in a wireless manner. For example, FIG. 5 is a flowchart of signaling between devices according to an embodiment of this application. As shown in FIG. 5, the first device may send a first frame to the third device, where the first frame is used to request sensing switching of the second device. After receiving the first frame, the third device may send, to the first device, a second frame in response to the first frame, where the second frame may include the sensing information of the third device.

For example, the first frame may be a sensing switch request (sensing switch request) frame, the second frame may be a sensing switch response (sensing switch response) frame, and the sensing switch response frame is used to respond to or reply to the sensing switch request frame. Specific names of the first frame and the second frame are not limited in this embodiment. For ease of description, the sensing switch request frame and the sensing switch response frame are uniformly used for description in the following.

The sensing switch request frame may carry a related parameter of the sensing switch request. For example, the sensing switch request frame may include at least one of identification information of the second device, a time for a sensing switch procedure, and the third device serving as a responder or an initiator in a new round of sensing measurement after sensing switching.

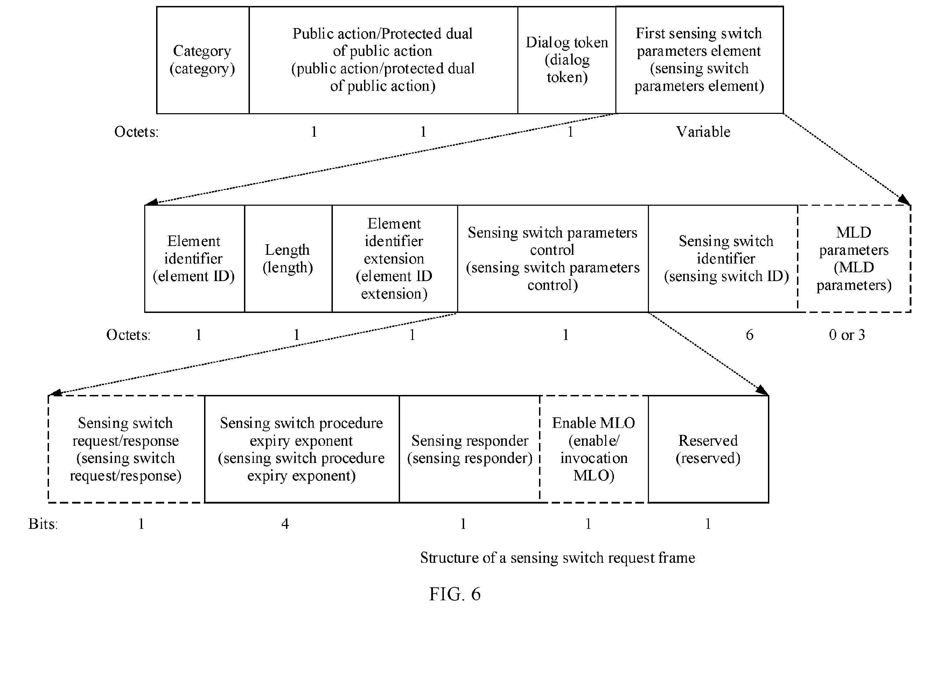

It may be understood that the sensing switch request frame may be a new frame. For a possible implementation of the sensing switch request frame, refer to FIG. 6. FIG. 6 is a diagram of a structure of a sensing switch request frame according to an embodiment of this application. As shown in FIG. 6, the sensing switch request frame may include a category (category) field, a public action/protected dual of public action (public action/protected dual of public action) field, a dialog token (dialog token) field, and a first sensing switch parameters element (sensing switch parameters element) field. The first sensing switch parameters element field includes an element identifier (element ID) field, a length (length) field, an element identifier extension (element ID extension) field, a sensing switch parameters control (sensing switch parameters control) field, a sensing switch identifier (sensing switch ID) field, and an MLD parameters (MLD parameters) field, where the sensing switch parameters control field includes a sensing switch procedure expiry exponent (sensing switch procedure expiry exponent) subfield, a sensing responder (sensing responder) subfield, and a reserved (reserved) subfield.

A value corresponding to the category field may be shown in the following Table 1.

**Table 1**

| Value | Description | Subclause reference | Robust (robust) | Group addressing encryption |
|---|---|---|---|---|
| 38 | Protected sensing framework | 9.6.36 (details of the protected sensing framework) | Yes | No |

Specifically, for a possible design, refer to the following Table 2.

**Table 2**

| Element | Element ID | Element ID extension | Extensible | Fragmentable (Fragmentable) |
|---|---|---|---|---|
| Sensing switch parameters | 255 | <last assigned+17> | Yes | No |

The sensing switch identifier field includes the identification information of the second device. Specifically, the first device may include an identifier of the second device into the sensing switch identifier field to indicate a device that needs to send a sensing switch request frame. First, the first device needs to obtain the identifier of the second device. An implementation of the identifier of the second device includes the following several cases. In a first case, the first device negotiates the identifier of the second device with the third device. For example, the first device assigns an identifier to the second device, and the assigned sensing switch identifier can be identified by the third device; or the second device sends an identifier of the second device to each device (including the first device) participating in coordinated multi-device transmission. In a second case, the identifier of the second device may be a MAC address of the second device, or an ID with a length of 16 bits is generated based on a MAC address of the second device. In a third case, a module in a device in which the third device is located corresponds to the second device (the second device is associated with the first device), and an AID of the module is used to identify the second device. In a fourth case, the third device may identify the second device by using a BSSID of the second device.

The sensing switch procedure expiry exponent subfield includes the time for the sensing switch procedure. For example, the sensing switch procedure expiry exponent subfield may occupy 4 bits (bit) and include an unsigned integer. A value corresponding to a sensing switch procedure expiry exponent may be equal to 2^{sensing switch procedure expiry exponent+8} ms, that is, the time for the sensing switch procedure is 2^{sensing switch procedure expiry exponent+8} ms. If no data is transmitted after the time, the sensing switch procedure is terminated.

The sensing responder subfield includes a target device (the third device) serving as a responder or an initiator in a new round of sensing measurement after sensing switching. For example, if the sensing responder subfield is 1, it may indicate that the third device serves as the responder in the new round of sensing measurement after sensing switching, or if the sensing responder subfield is 0, it may indicate that the third device serves as the initiator in the new round of sensing measurement after sensing switching.

In a possible implementation, the sensing switch parameters control field further includes a sensing switch request/response (sensing switch request/response) subfield and an enable (enable/invocation) MLO (enable MLO) subfield.

The sensing switch request/response subfield may indicate that the sensing switch parameters element field is included in the sensing switch request frame or the sensing switch response frame. The sensing switch request/response subfield is an optional field. An implementation may be as follows: For example, if the sensing switch request/response subfield is 1, it may indicate that the sensing switch parameters element field is included in the sensing switch request frame; or if the sensing switch request/response subfield is 0, it may indicate that the sensing switch parameters element field is included in the sensing switch response frame.

The enable MLO subfield is used to determine whether to enable the multi-link operation. The enable MLO subfield is an optional field. An implementation may be as follows: For example, if the enable MLO subfield is set to 1, it may indicate that the multi-link operation is enabled; or if the enable MLO subfield is set to 0, it may indicate that the multi-link operation is not enabled or not supported. The foregoing implementation is merely a special implementation example of the enable MLO subfield, and may be flexibly used based on a specific situation. A name of the enable MLO subfield and a quantity of bits of the field are not limited herein.

The MLD parameters field indicates information such as a link device ID and a link ID. An implementation of the enable MLO subfield may be as follows: For example, when the enable MLO subfield is 1, it may indicate that the MLD parameters field is present; or when the enable MLO subfield is 0, it may indicate that the MLD parameters field is absent or is a reserved field.

The sensing switch response frame may carry a related parameter of the sensing switch response, for example, including at least one of sensing switch success or failure, the sensing information of the third device, location information of the third device, the time for the sensing switching procedure, and the third device serving as a responder or an initiator in a new round of sensing measurement after sensing switching.

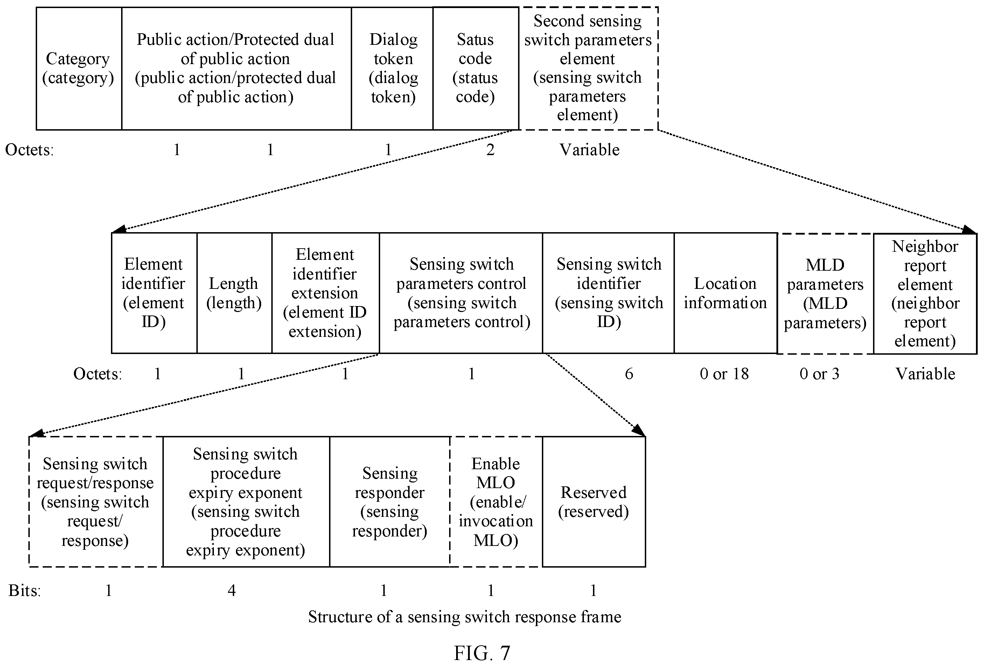

It may be understood that the sensing switch response frame may be a new frame. For a possible implementation of the sensing switch response frame, refer to FIG. 7. FIG. 7 is a diagram of a structure of a sensing switch response frame according to an embodiment of this application. As shown in FIG. 7, the sensing switch response frame may include a category (category) field, a public action/protected dual of public action (public action/protected dual of public action) field, a dialog token (dialog token) field, and a status code (status code) field.

The status code field indicates sensing switch success or failure. An implementation may be as follows: For example, if the status code field is 1, it may indicate sensing switch success; or if the status code field is 0, it may indicate sensing switch failure. For another example, if the status code field is success (success), it may indicate sensing switch success; otherwise, it indicates sensing switch failure.

In a possible implementation, the sensing switch response frame may further include a second sensing switch parameters element field (sensing switch parameters element). The second sensing switch parameters element field is an optional field. An implementation may be as follows: When the status code field indicates sensing switch success, the second sensing switch parameters element field is present; otherwise, the second sensing switch parameters element field is absent.

The second sensing switch parameters element field includes an element identifier (element ID) field (which may also be referred to as an element identifier field), a length (length) field, an element identifier extension (element ID extension) field, a sensing switch parameters control (sensing switch parameters control) field, a sensing switch identifier (sensing switch ID) field (which may also be referred to as a sensing switch identifier or sensing switch identification code), a location information field, an MLD parameters (MLD parameters) field, and a neighbor report element (neighbor report element) field. The sensing switch parameters control field includes a sensing switch procedure expiry exponent (sensing switch procedure expiry exponent) subfield, a sensing responder (sensing responder) subfield, and a reserved (reserved) subfield. In a possible implementation, the sensing switch parameters control field further includes a sensing switch request/response (sensing switch request/response) subfield and an enable MLO (enable MLO) subfield.

The location information field is used to transfer/carry the location information of the third device. The location information field is an optional field. An implementation may be as follows: The location information field may occupy 18 octets, and the location information field may be correspondingly extended for a specific application scenario. A quantity of bits occupied by the location information field is not limited herein. When the location information is optional, an optional field may be added for supplementation herein.

The neighbor report element field is an optional field, and the neighbor report element field may be used to transfer/carry the sensing information of the third device.

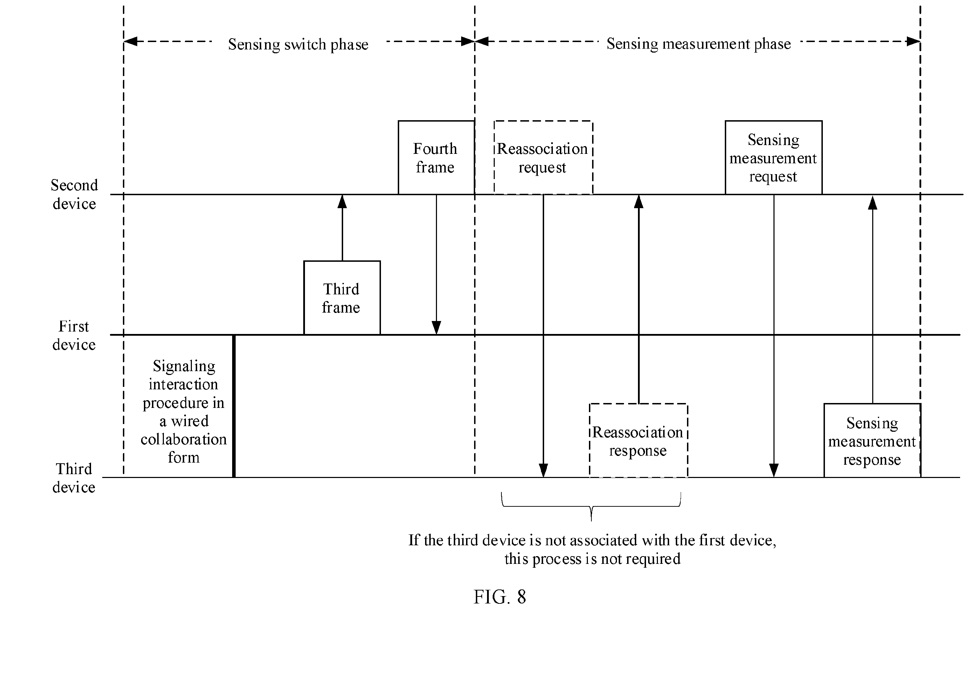

In a second possible implementation, the first device may obtain the first information from the third device in a wired manner. FIG. 8 is another flowchart of signaling between devices according to an embodiment of this application. As shown in FIG. 8, the first device and the third device may communicate with each other in a wired manner. For example, the first device obtains the first information from the third device.

Collaboration between the first device and the third device (for example, collaboration between multiple APs) may be performed in a wired manner or a wireless manner, so that a communication mode between devices is more flexible.

S402: The first device sends the first information to the second device. Correspondingly, the second device receives the first information from the first device.

After obtaining the first information, the first device may send the first information to the second device. In a possible implementation, as shown in preceding FIG. 5 or FIG. 8, the first device may send a third frame to the second device, where the third frame may include the first information.

For example, the third frame may be a sensing suggestion request (sensing suggestion request) frame. A fourth frame may be a sensing suggestion response (sensing suggestion response) frame, and the sensing suggestion response frame is used to respond to or reply to the sensing suggestion request frame. Specific names of the third frame and the fourth frame are not limited in this embodiment. For ease of description, the sensing suggestion request frame and the sensing suggestion response frame are uniformly used for description in the following.

The sensing suggestion request frame may carry a related parameter of the sensing suggestion request. For example, the sensing suggestion request frame may include at least one of the location information of the third device, whether the third device enables multi-link sensing, the sensing information of the third device, the third device serving as a responder or an initiator in a new round of sensing measurement after sensing switching, and the number of suggested third devices capable of performing sensing switching with the second device.

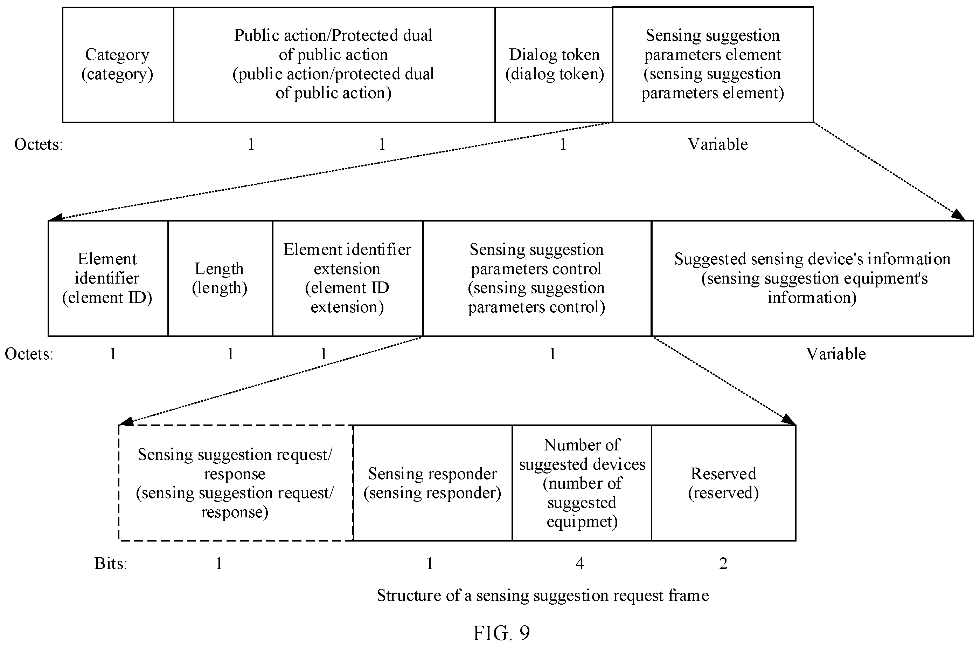

It may be understood that the sensing suggestion request frame may be a new frame. For a possible implementation of the sensing suggestion request frame, refer to FIG. 9. FIG. 9 is a diagram of a structure of a sensing suggestion request frame according to an embodiment of this application. As shown in FIG. 9, the sensing suggestion request frame may include a category (category) field, a public action/protected dual of public action (public action/protected dual of public action) field, a dialog token (dialog token) field, and a sensing suggestion parameters element (sensing suggestion parameters element) field. The sensing suggestion parameters element field includes an element identifier (element ID) field, a length (length) field, an element identifier extension (element ID extension) field, a sensing suggestion parameters control (sensing suggestion parameters control) field, and a suggested sensing device's information (sensing suggestion equipment's information) field. The sensing suggestion parameters control field includes a sensing responder (sensing responder) subfield, a number of suggested devices (number of suggested equipment) subfield, and a reserved (reserved) subfield.

The number of suggested devices subfield includes the number of suggested third devices capable of performing sensing switching with the second device.

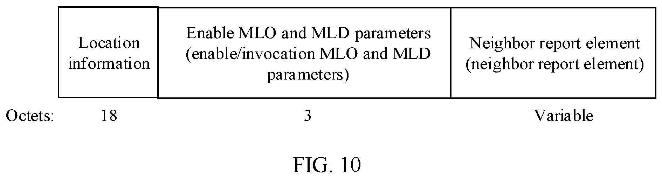

The suggested sensing device's information field includes information about at least one third device, for example, includes the location information of the third device, whether the third device enables multi-link sensing, and the sensing information of the third device. For an implementation of a third device's information field, refer to FIG. 10. FIG. 10 is a diagram of a structure of a suggested sensing device's information field according to an embodiment of this application. As shown in FIG. 10, the suggested sensing device's information field includes a location information field, an enable MLO and MLD parameters (enable MLO and MLD parameters) field, and a neighbor report element (neighbor report element) field.

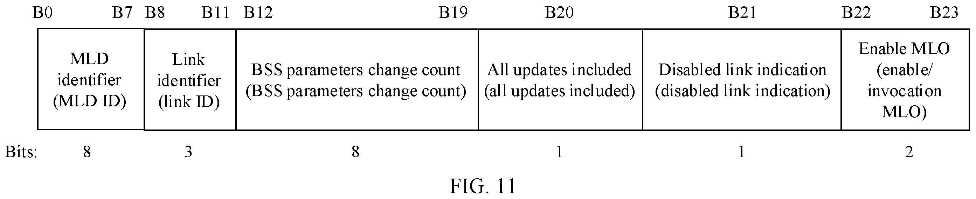

In a possible implementation, the enable MLO and MLD parameters field includes whether the third device enables multi-link sensing, and may further include information such as a link device ID and a link ID. For a possible implementation of the enable MLO and MLD parameters field, refer to FIG. 11. FIG. 11 is a diagram of a structure of an enable MLO and MLD parameters field according to an embodiment of this application. As shown in FIG. 11, the enable MLO and MLD parameters field includes an MLD identifier (MLD ID) subfield, a link identifier (link ID) subfield, a BSS parameters change count (BSS parameters change count) subfield, an all update included (all update included) subfield, a disabled link indication (disabled link indication) subfield, and an enable MLO (enable MLO) subfield.

In a possible implementation, the sensing suggestion parameters control field further includes a sensing suggestion request/response (sensing suggestion request/response) subfield. The sensing suggestion request/response subfield may indicate that the sensing suggestion parameters element field is included in the sensing suggestion request frame or the sensing suggestion response frame. The sensing suggestion request/response subfield is an optional field. An implementation may be as follows: For example, if the sensing suggestion request/response subfield is 1, it may indicate that the sensing suggestion parameters element field is included in the sensing suggestion request frame; or if the sensing suggestion request/response subfield is 0, it may indicate that the sensing suggestion parameters element field is included in the sensing suggestion response frame.

Specifically, for a possible design, refer to the following Table 3.

**Table 3**

| Element | Element ID | Element ID extension | Extensible | Fragmentable |
|---|---|---|---|---|
| Sensing suggestion parameters | 255 | <last assigned+18> | Yes | No |

The sensing suggestion response frame may carry a related parameter of the sensing suggestion response, for example, including at least one of status indication information, the location information of the third device, whether the third device enables multi-link sensing, the sensing information of the third device, the third device serving as a responder or an initiator in a new round of sensing measurement after sensing switching, and the number of suggested third devices capable of performing sensing switching with the second device. The status indication information indicates whether the second device successfully receives the first information.

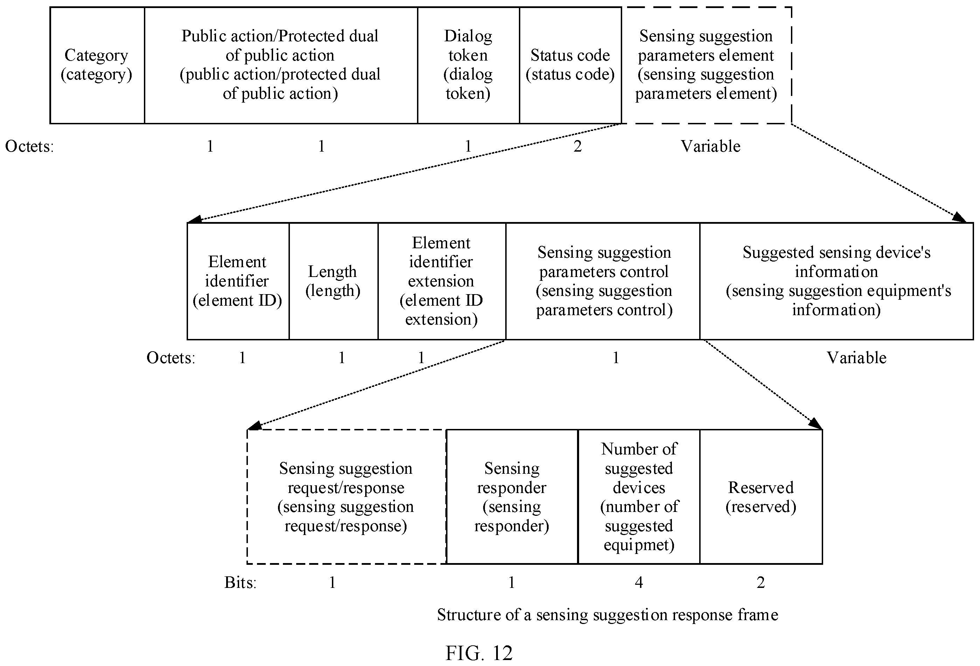

It may be understood that the sensing suggestion response frame may be a new frame. For a possible implementation of the sensing suggestion response frame, refer to FIG. 12. FIG. 12 is a diagram of a structure of a sensing suggestion response frame according to an embodiment of this application. As shown in FIG. 12, the sensing suggestion response frame may include a category (category) field, a public action/protected dual of public action (public action/protected dual of public action) field, a dialog token (dialog token) field, and a status code (status code) field.

The status code may include status indication information, and the status indication information indicates whether the second device successfully receives the first information. An implementation may be as follows: For example, if the status code field is 1, it may indicate that the second device successfully receives the first information; or if the status code field is 0, it may indicate that the second device fails to receive the first information. For another example, if the status code field is success (success), it may indicate that the second device successfully receives the first information; otherwise, it indicates that the second device fails to receive the first information.

In a possible implementation, the sensing switch response frame may further include a sensing suggestion parameters element (sensing suggestion parameters element) field, where the sensing suggestion parameters element field includes an element identifier (element ID) field, a length (length) field, an element identifier extension (element ID extension) field, a sensing suggestion parameters control (sensing suggestion parameters control) field, and a suggested sensing device's information (sensing suggestion equipment's information) field, where the sensing suggestion parameters control field includes a sensing responder (sensing responder) subfield, a number of suggested devices (number of suggested equipment) subfield, and a reserved (reserved) subfield. In a possible implementation, the sensing suggestion parameters control field further includes a sensing suggestion request/response (sensing suggestion request/response) subfield.

The sensing suggestion parameters element field is an optional field. An implementation may be as follows: If the status code field indicates that the second device successfully receives the first information, the sensing suggestion parameters element field is present; otherwise, the sensing suggestion parameters element field is absent.

For a possible design of public action field values (public action field values) in the foregoing four frames, refer to the following Table 4.

**Table 4**

| Public action field values | Description |
|---|---|
| 60 | Sensing switch request |
| 61 | Sensing switch response |
| 62 | Sensing suggestion request |
| 63 | Sensing suggestion response |

In a possible implementation, the public action field values may also be located in protected dual of public action frames (protected dual of public action frames). For details, refer to the following Table 5.

**Table 5**

| Protected dual of public action frames | Description |
|---|---|
| <last assigned+8> | Sensing switch request |
| <last assigned+8> | Sensing switch response |
| <last assigned+8> | Sensing suggestion request |
| <last assigned+8> | Sensing suggestion response |

S403: The second device determines, based on the first information, a target device for sensing switching.

After receiving the first information from the first device, the second device may determine, based on the sensing information that is of the at least one third device capable of performing sensing switching with the second device and that is included in the first information, the target device for sensing switching. The target device is a device in the at least one third device.

Further, the foregoing step may further include:
performing sensing measurement between the second device and the third device. For example, as shown in preceding FIG. 5 or FIG. 8, the second device and the third device may implement sensing measurement by using a sensing measurement request and a sensing measurement response. In a possible implementation, before the sensing measurement, if the first device has been associated with the third device, the method may further include: The second device and the third device may implement reassociation by using a reassociation request and a reassociation response. It may be understood that the third device is the target device for sensing switching that is determined by the second device.

In this embodiment of this application, in a WLAN sensing process, multi-device collaboration may be used to implement sensing switching and simplify probing and scanning procedures. For example, when detecting a decrease in sensing precision, the first device may exchange information with devices in a device collaboration set, to obtain information about devices surrounding the second device and suggest a switchable device (for example, the first information) in the device collaboration set to the second device, so that a device in the device collaboration set can be autonomously selected for switching, thereby improving efficiency of a sensing switching process. In addition, the second device can select, based on the first information, a device with a relatively good sensing measurement result to perform sensing measurement, thereby improving quality of sensing switching.

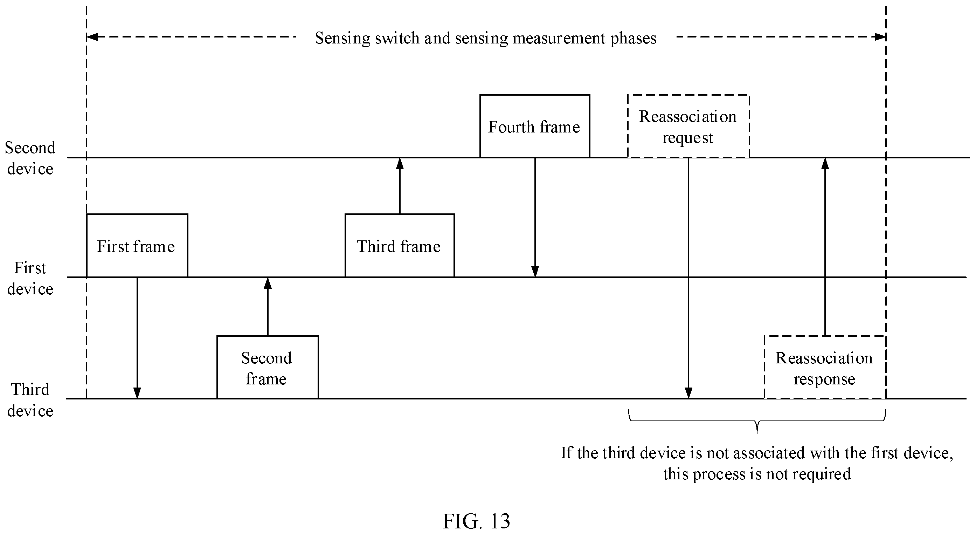

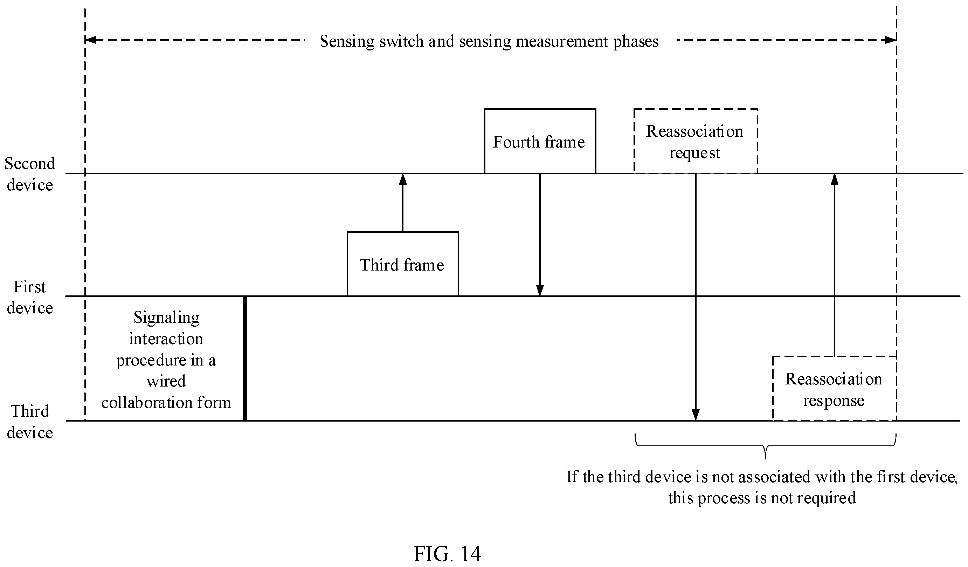

With reference to the embodiment in FIG. 4, in a possible implementation, the sensing measurement between the second device and the third device may be implemented by using the first device and the third device. In other words, the sensing measurement in S403 may be implemented in sensing switching in S401 and S402. Through collaboration between the first device and the third device, the first device may perform the sensing measurement with the third device on behalf of the second device. Specifically, refer to FIG. 13 and FIG. 14. FIG. 13 and FIG. 14 are other flowcharts of signaling between devices according to an embodiment of this application. Different from FIG. 5 and FIG. 8, in FIG. 13 and FIG. 14, a separate sensing measurement request and a separate sensing measurement response are not required, and a parameter related to sensing measurement is carried by using at least one of a first frame, a second frame, a third frame, and a fourth frame, or a parameter related to sensing measurement is carried by using at least one of a wired collaboration form, a third frame, and a fourth frame, to implement sensing switch and sensing measurement phases.

As shown in FIG. 13, for example, the first frame may be a sensing switch measurement request (sensing switch measurement request) frame, the second frame may be a sensing switch measurement response (sensing switch measurement response) frame, and the sensing switch measurement response frame is used to respond to or reply to the sensing switch measurement request frame. Specific names of the first frame and the second frame are not limited in this embodiment. For ease of description, the sensing switch measurement request frame and the sensing switch measurement response frame are uniformly used for description in the following.

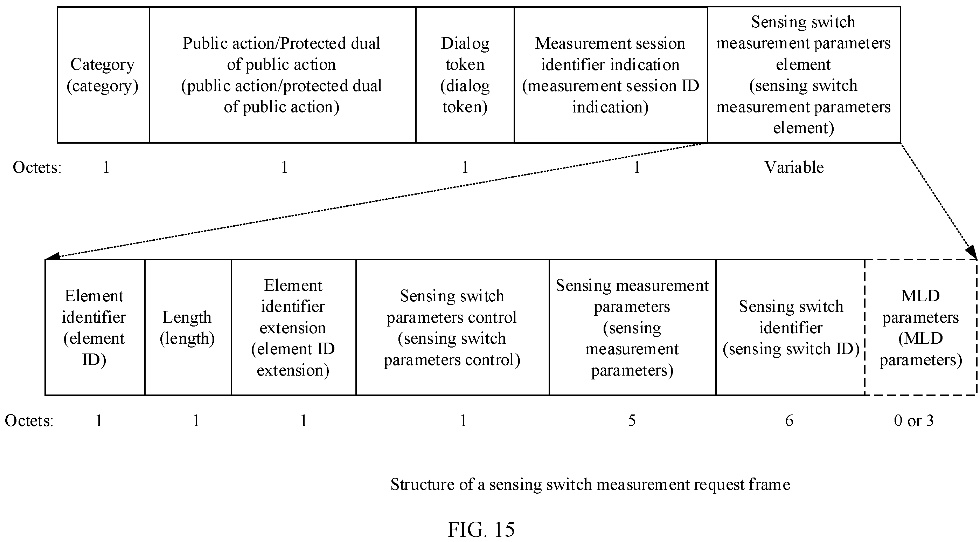

It may be understood that the sensing switch measurement request frame may be modified based on the sensing measurement request frame. For a possible implementation of the sensing switch measurement request frame, refer to FIG. 15. FIG. 15 is a diagram of a structure of a sensing switch measurement request frame according to an embodiment of this application. As shown in FIG. 15, the sensing switch measurement request frame may include a category (category) field, a public action/protected dual of public action (public action/protected dual of public action) field, a dialog token (dialog token) field, a measurement session identifier indication (measurement session ID indication) field, and a sensing switch measurement parameters element (sensing switch measurement parameters element) field. The sensing switch measurement parameters element field includes an element identifier (element ID) field, a length (length) field, an element identifier extension (element ID extension) field, a sensing switch parameters control (sensing switch parameters control) field, a sensing measurement parameters (sensing measurement parameters) field, and a sensing switch identifier (sensing switch ID) field. In a possible implementation, the sensing switch measurement parameters element field may further include an MLD parameters (MLD parameters) field.

The sensing measurement parameters field includes a first sensing measurement parameter. For descriptions of other fields, refer to the descriptions in step S401. Details are not described herein again.

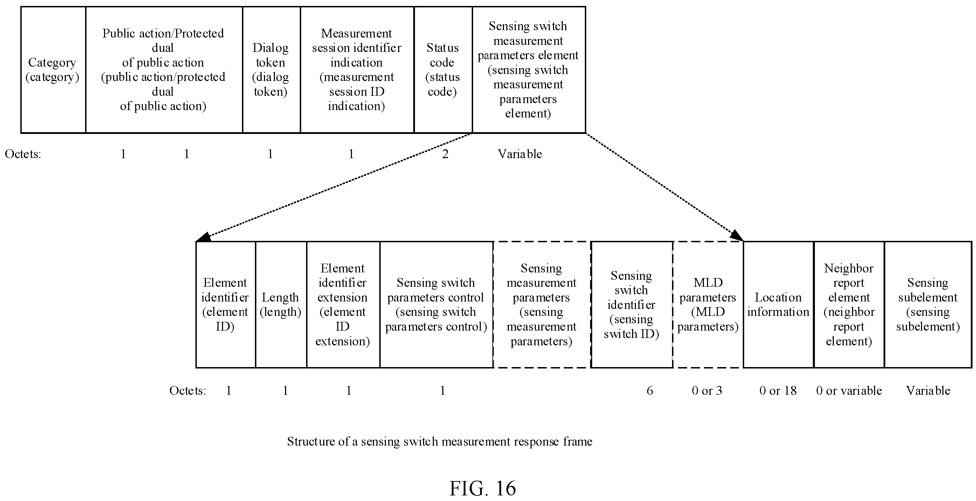

The sensing switch measurement response frame may be modified based on the sensing measurement response frame. For a possible implementation of the sensing switch measurement response frame, refer to FIG. 16. FIG. 16 is a diagram of a structure of a sensing switch measurement response frame according to an embodiment of this application. As shown in FIG. 16, the sensing switch measurement response frame may include a category (category) field, a public action/protected dual of public action (public action/protected dual of public action) field, a dialog token (dialog token) field, a measurement session identifier indication (measurement session ID indication) field, a status code (status code) field, and a sensing switch measurement parameters element (sensing switch measurement parameters element) field. The sensing switch measurement parameters element field includes an element identifier (element ID) field, a length (length) field, an element identifier extension (element ID extension) field, a sensing switch parameters control (sensing switch parameters control) field, a sensing switch identifier (sensing switch ID) field, a location information field, a neighbor report element (neighbor report element) field, and a sensing subelement (sensing subelement) field.

The status code field includes indication information indicating whether the third device accepts the first sensing measurement parameter. An implementation may be as follows: For example, if the status code field is 1, it may indicate that the first sensing measurement parameter is accepted; or if the status code field is 0, it may indicate that the first sensing measurement parameter is not accepted. For another example, if the status code field is success (success), it may indicate that the first sensing measurement parameter is accepted; otherwise, it indicates that the first sensing measurement parameter is not accepted.

When the status code field indicates that the first sensing measurement parameter is accepted, the sensing switch measurement parameters element field may not include the sensing measurement parameters field. When the status code field indicates that the first sensing measurement parameter is not accepted, the sensing switch measurement parameters element field may include the sensing measurement parameters field, the sensing measurement parameters field includes a second sensing measurement parameter, and the second sensing parameter is determined by the third device.

Further, the sensing switch measurement parameters element field may further include an MLD parameters (MLD parameters) field. For descriptions of other fields, refer to the descriptions in step S401. Details are not described herein again.

As shown in FIG. 13 and FIG. 14, for example, the third frame may be a sensing suggestion request (sensing suggestion request) frame. The fourth frame may be a sensing suggestion response (sensing suggestion response) frame, and the sensing suggestion response frame is used to respond to or reply to the sensing suggestion request frame.

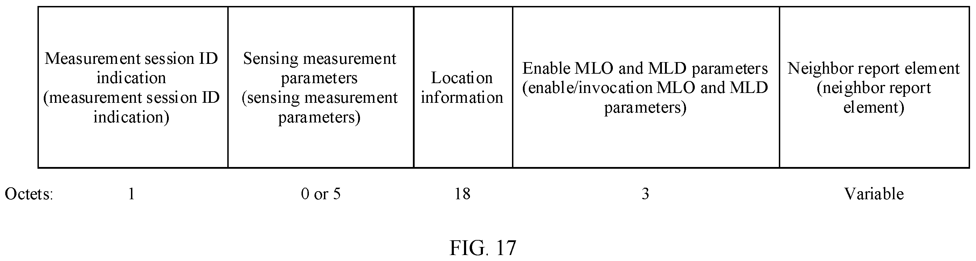

Compared with the sensing suggestion request frame in FIG. 9, the first information included in the sensing suggestion request frame may further include a sensing measurement parameter of the third device. The sensing suggestion request frame includes a suggested sensing device's information field, and the suggested sensing device's information field includes the first information. For a possible implementation of the suggested sensing device's information field, refer to FIG. 17. FIG. 17 is a diagram of a structure of another suggested sensing device's information field according to an embodiment of this application. As shown in FIG. 17, the suggested sensing device's information field includes a measurement session ID indication (measurement session ID indication) field, a location information field, an enable MLO and MLD parameters (enable MLO and MLD parameters) field, and a neighbor report element (neighbor report element) field.

In a possible implementation, the suggested sensing device's information field may further include a sensing measurement parameters (sensing measurement parameters) field, and the sensing measurement parameters field includes the sensing measurement parameter of the third device. An implementation may be as follows: If the sensing measurement parameter of the third device is not included, it may indicate that the third device accepts the sensing measurement parameter previously provided by the second device; or if the sensing measurement parameter of the third device is included, it may indicate that the third device does not accept the sensing measurement parameter previously provided by the second device and provides a new sensing measurement parameter for the second device.

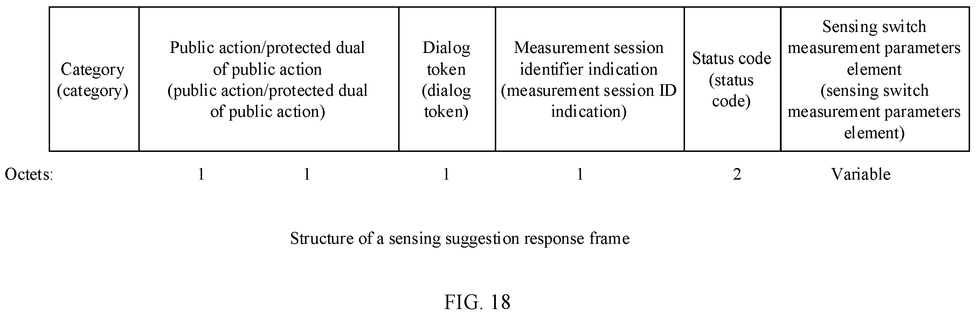

Compared with the sensing suggestion response frame in FIG. 12, FIG. 18 is a diagram of a structure of another sensing suggestion response frame according to an embodiment of this application. As shown in FIG. 18, the sensing suggestion response frame may further include a measurement session ID indication (measurement session ID indication) field. The measurement session ID indication field indicates a session for performing measurement with the third device. For descriptions of other same fields, refer to the descriptions in step S401. Details are not described again.

In this embodiment of this application, on a basis of implementing sensing switching by using multi-device collaboration, sensing measurement parameters may be further exchanged in a sensing switch phase, so that the second device and the third device subsequently perform a sensing measurement session procedure. This can not only improve efficiency of the sensing switching process, but also improve efficiency of sensing measurement because the second device can select, based on the first information, a device with a relatively good sensing measurement result to perform sensing measurement, thereby improving quality of sensing switching.

The foregoing content describes the method provided in this application. To better implement the foregoing solutions in embodiments of this application, embodiments of this application further provide a corresponding apparatus.

In embodiments of this application, the communication apparatus may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that the module division in embodiments of this application is an example, and is merely logical function division. There may be another division manner in actual implementation.

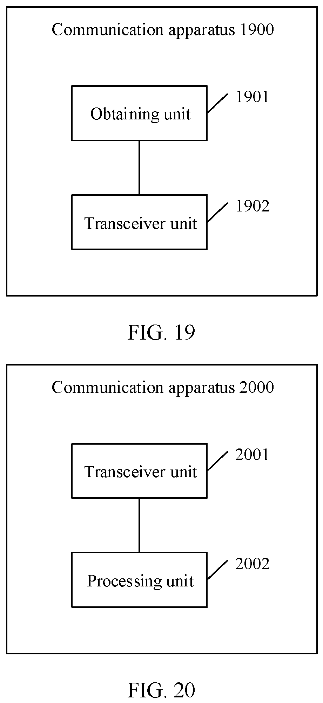

FIG. 19 is a diagram of a structure of a communication apparatus according to an embodiment of this application. The communication apparatus may be a first device, a module (for example, a chip or a processor) in a first device, or a logical module or software that can implement all or some functions of a first device. As shown in FIG. 19, the communication apparatus 1900 includes at least an obtaining unit 1901 and a transceiver unit 1902.

The obtaining unit 1901 is configured to obtain first information, where the first information includes sensing information of at least one third device capable of performing sensing switching with a second device.

The transceiver unit 1902 is configured to send the first information to the second device.

In an embodiment, the sensing information includes at least one of a basic service set identifier BSSID of the third device, operating channel information, and whether the third device has a sensing capability.

In an embodiment, when obtaining the first information, the obtaining unit 1901 is specifically configured to:
send a first frame to the third device, where the first frame is used to request sensing switching of the second device; and
receive a second frame from the third device, where the second frame is a response to the first frame, and the second frame includes sensing information of the third device.

In an embodiment, the first frame is a sensing switch request frame, and the sensing switch request frame includes at least one of identification information of the second device, a time for a sensing switch procedure, and the third device serving as a responder or an initiator in a new round of sensing measurement after sensing switching.

In an embodiment, the sensing switch request frame includes a first sensing switch parameters element field, the first sensing switch parameters element field includes a sensing switch identifier field, and the sensing switch identifier field includes the identification information of the second device.

In an embodiment, the second frame is a sensing switch response frame, and the sensing switch response frame includes at least one of sensing switch success or failure, the sensing information of the third device, location information of the third device, the time for the sensing switching procedure, and the third device serving as a responder or an initiator in a new round of sensing measurement after sensing switching.

In an embodiment, the sensing switch response frame includes a status code field, and the status code field indicates sensing switch success or failure.

In an embodiment, when the status code field indicates sensing switch success, the sensing switch response frame further includes a second sensing switch parameters element field, and the second sensing switch parameters element field includes at least one of the sensing information of the third device and the location information of the third device.

In an embodiment, the second sensing switch parameters element field further includes at least one of a location information field and a neighbor report element field, where the location information field includes the location information of the third device, and the neighbor report element field includes the sensing information of the third device.

In an embodiment, the first sensing switch parameters element field or the second sensing switch parameters element field further includes a sensing switch parameters control field, and the sensing switch parameters control field includes at least one of a sensing switch procedure expiry exponent subfield and a sensing responder subfield, where the sensing switch procedure expiry exponent subfield includes the time for the sensing switch procedure, and the sensing responder subfield indicates that the third device serves as the responder or the initiator in the new round of sensing measurement after sensing switching.

In an embodiment, when sending the first information to the second device, the transceiver unit 1902 is specifically configured to: send a third frame to the second device, where the third frame includes the first information.

In an embodiment, the third frame is a sensing suggestion request frame, and the sensing suggestion request frame includes at least one of the location information of the third device, whether the third device enables multi-link sensing, the sensing information of the third device, the third device serving as a responder or an initiator in a new round of sensing measurement after sensing switching, and the number of suggested third devices capable of performing sensing switching with the second device.

In an embodiment, the sensing suggestion request frame includes a sensing suggestion parameters element field, the sensing suggestion parameters element field includes a suggested sensing device's information field, and the suggested sensing device's information field includes at least one of a location information field, an enable MLO and MLD parameters field, and a neighbor report element field, where the location information field includes the location information of the third device, the enable MLO and MLD parameters field includes whether the third device enables multi-link sensing, and the neighbor report element field includes the sensing information of the third device.

In an embodiment, the transceiver unit 1902 is further configured to receive a fourth frame from the second device, where the fourth frame is a response to the third frame, and the fourth frame includes at least one of status indication information, the location information of the third device, whether the third device enables multi-link sensing, the sensing information of the third device, the third device serving as a responder or an initiator in a new round of sensing measurement after sensing switching, and the number of suggested third devices capable of performing sensing switching with the second device, where the status indication information indicates whether the second device successfully receives the first information.

In an embodiment, the fourth frame is a sensing suggestion response frame, the sensing suggestion response frame includes a status code field, and the status code field includes the status indication information.

In an embodiment, when the status indication information indicates that the second device successfully receives the first information, the sensing suggestion response frame further includes a sensing suggestion parameters element field, the sensing suggestion parameters element field includes a suggested sensing device's information field, and the suggested sensing device's information field includes at least one of a location information field, an enable MLO and MLD parameters field, and a neighbor report element field, where the location information field includes the location information of the third device, the enable MLO and MLD parameters field includes whether the third device enables multi-link sensing, and the neighbor report element field includes the sensing information of the third device.

In an embodiment, the sensing suggestion parameters element field further includes a sensing suggestion parameters control field, and the sensing suggestion parameters control field includes at least one of a sensing responder subfield and a number of suggested devices subfield, where the sensing responder subfield includes the third device serving as a responder or an initiator in a new round of sensing measurement after sensing switching, and the number of suggested devices subfield includes the number of suggested third devices capable of performing sensing switching with the second device.

In an embodiment, the first frame further includes a first sensing measurement parameter.

In an embodiment, when the third device does not accept the first sensing measurement parameter, the second frame further includes a sensing measurement parameters field, the sensing measurement parameters field includes a second sensing measurement parameter, and the second sensing measurement parameter is determined by the third device.

In an embodiment, the first information further includes a sensing measurement parameter of the third device.

In an embodiment, the fourth frame further includes a measurement session identifier indication field, and the measurement session identifier indication field indicates a session for performing measurement with the third device.

For more detailed descriptions of the obtaining unit 1901 and the transceiver unit 1902, directly refer to related descriptions of the first device in the method embodiments shown in FIG. 4 to FIG. 18. Details are not described herein.

FIG. 20 is a diagram of a structure of another communication apparatus according to an embodiment of this application. The communication apparatus may be a second device, a module (for example, a chip or a processor) in a second device, or a logical module or software that can implement all or some functions of a second device. As shown in FIG. 20, the communication apparatus 2000 includes at least a transceiver unit 2001 and a processing unit 2002.

The transceiver unit 2001 is configured to receive first information from a first device, where the first information includes sensing information of at least one third device capable of performing sensing switching with a second device.

The processing unit 2002 is configured to determine, based on the first information, a target device for sensing switching.

In an embodiment, the sensing information includes at least one of a BSSID of the third device, operating channel information, and whether the third device has a sensing capability.

In an embodiment, when receiving the first information from the first device, the transceiver unit 2001 is specifically configured to: receive a third frame from the first device, where the third frame includes the first information.

In an embodiment, the third frame is a sensing suggestion request frame, and the sensing suggestion request frame includes at least one of location information of the third device, whether the third device enables multi-link sensing, sensing information of the third device, the third device serving as a responder or an initiator in a new round of sensing measurement after sensing switching, and the number of suggested third devices capable of performing sensing switching with the second device.

In an embodiment, the sensing suggestion request frame includes a sensing suggestion parameters element field, the sensing suggestion parameters element field includes a suggested sensing device's information field, and the suggested sensing device's information field includes at least one of a location information field, an enable MLO and MLD parameters field, and a neighbor report element field, where the location information field includes the location information of the third device, the enable MLO and MLD parameters field includes whether the third device enables multi-link sensing, and the neighbor report element field includes the sensing information of the third device.

In an embodiment, the transceiver unit 2001 is further configured to send a fourth frame to the first device, where the fourth frame is a response to the third frame, and the fourth frame includes at least one of status indication information, the location information of the third device, whether the third device enables multi-link sensing, the sensing information of the third device, the third device serving as a responder or an initiator in a new round of sensing measurement after sensing switching, and the number of suggested third devices capable of performing sensing switching with the second device, where the status indication information indicates whether the second device successfully receives the first information.

In an embodiment, the fourth frame is a sensing suggestion response frame, the sensing suggestion response frame includes a status code field, and the status code field includes the status indication information.

In an embodiment, when the status indication information indicates that the second device successfully receives the first information, the sensing suggestion response frame further includes a sensing suggestion parameters element field, the sensing suggestion parameters element field includes a suggested sensing device's information field, and the suggested sensing device's information field includes at least one of a location information field, an enable MLO and MLD parameters field, and a neighbor report element field, where the location information field includes the location information of the third device, the enable MLO and MLD parameters field includes whether the third device enables multi-link sensing, and the neighbor report element field includes the sensing information of the third device.

In an embodiment, the sensing suggestion parameters element field further includes a sensing suggestion parameters control field, and the sensing suggestion parameters control field includes at least one of a sensing responder subfield and a number of suggested devices subfield, where the sensing responder subfield includes the third device serving as a responder or an initiator in a new round of sensing measurement after sensing switching, and the number of suggested devices subfield includes the number of suggested third devices capable of performing sensing switching with the second device.

In an embodiment, the first information further includes a sensing measurement parameter of the third device.

In an embodiment, the fourth frame further includes a measurement session identifier indication field, and the measurement session identifier indication field indicates a session for performing measurement with the third device.

For more detailed descriptions of the transceiver unit 2001 and the processing unit 2002, directly refer to related descriptions of the second device in the method embodiments shown in FIG. 4 to FIG. 18. Details are not described herein.

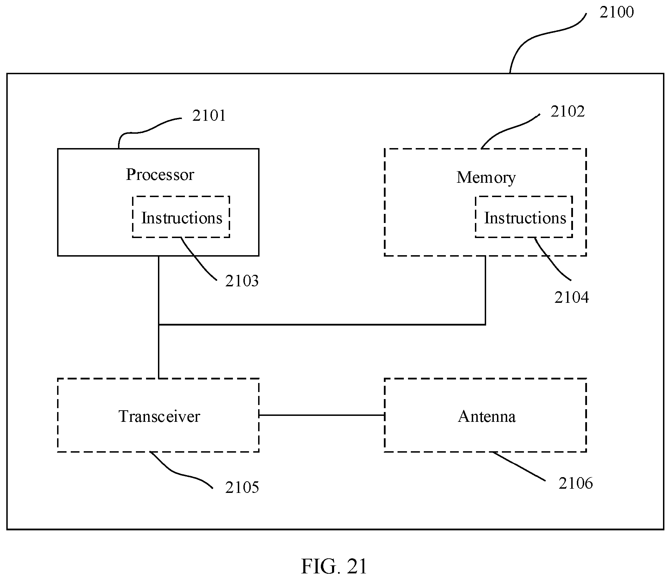

FIG. 21 is a diagram of a structure of still another communication apparatus according to an embodiment of this application. As shown in FIG. 21, the apparatus 2100 may include one or more processors 2101. The processor 2101 may also be referred to as a processing unit, and may implement a specific control function. The processor 2101 may be a general-purpose processor, a dedicated processor, or the like.

In an optional design, the processor 2101 may store instructions 2103, and the instructions 2103 may be run by the processor, to enable the apparatus 2100 to perform the method described in the foregoing method embodiments.

In another optional design, the processor 2101 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separate, or may be integrated. The transceiver circuit, the interface, or the interface circuit may be configured to read and write code/data. Alternatively, the transceiver circuit, the interface, or the interface circuit may be configured to transmit or transfer a signal.

In still another possible design, the apparatus 2100 may include a circuit. The circuit may implement a sending, receiving, or communication function in the foregoing method embodiments.

Optionally, the apparatus 2100 may include one or more memories 2102, and the memory may store instructions 2104. The instructions may be run on the processor, to enable the apparatus 2100 to perform the method described in the foregoing method embodiments. Optionally, the memory may further store data. Optionally, the processor may also store instructions and/or data. The processor and the memory may be separately disposed, or may be integrated together. For example, a correspondence described in the foregoing method embodiments may be stored in the memory or the processor.

Optionally, the apparatus 2100 may further include a transceiver 2105 and/or an antenna 2106. The processor 2101 may be referred to as a processing unit, and control the apparatus 2100. The transceiver 2105 may be referred to as a transceiver unit, a transceiver device, a transceiver circuit, a transceiver apparatus, a transceiver module, or the like, and is configured to implement receiving and sending functions.

Optionally, the apparatus 2100 in this embodiment of this application may be configured to perform the method described in FIG. 4 to FIG. 18 in embodiments of this application.

In an embodiment, the communication apparatus 2100 may be applied to a first device, a module (for example, a chip or a processor) in a first device, or a logical module or software that can implement all or some functions of a first device. When computer program instructions stored in the memory 2102 are executed, the processor 2101 is configured to control the obtaining unit 1901 to perform the operations performed in the foregoing embodiments, the transceiver 2105 is configured to perform the operations performed by the transceiver unit 1902 in the foregoing embodiments, and the transceiver 2105 is further configured to send information to a communication apparatus other than the communication apparatus. The first device or the module in the first device may be further configured to perform the method performed by the first device in the method embodiments in FIG. 4 to FIG. 18. Details are not described again.

In an embodiment, the communication apparatus 2100 may be applied to a second device, a module (for example, a chip or a processor) in a second device, or a logical module or software that can implement all or some functions of a second device. When computer program instructions stored in the memory 2102 are executed, the processor 2101 is configured to control the processing unit 2002 to perform the operations performed in the foregoing embodiments, the transceiver 2105 is configured to perform the operations performed by the transceiver unit 2001 in the foregoing embodiments, and the transceiver 2105 is further configured to send information to a communication apparatus other than the communication apparatus. The second device or the module in the second device may be further configured to perform the method performed by the second device in the method embodiments in FIG. 4 to FIG. 18. Details are not described again.

The processor and the transceiver described in this application may be implemented on an integrated circuit (integrated circuit, IC), an analog IC, a radio frequency integrated circuit (radio frequency interface circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal-oxide-semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiment may be a first terminal device or a second terminal device. However, a scope of the apparatus described in this application is not limited thereto, and a structure of the apparatus may not be limited by FIG. 21. The apparatus may be an independent device or may be a part of a large device. For example, the apparatus may be:
(1) an independent integrated circuit IC, a chip, or a chip system or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

An embodiment of this application further provides a computer-readable storage medium. The computer-readable storage medium stores a computer program. When the program is executed by a processor, a procedure related to the first device in the communication method provided in the foregoing method embodiments may be implemented.

An embodiment of this application further provides a computer program product. When the computer program product is run on a computer or a processor, the computer or the processor is caused to perform one or more steps in any one of the foregoing communication methods. When the foregoing modules in the device are implemented in a form of a software functional unit and sold or used as an independent product, the modules may be stored in a computer-readable storage medium.

An embodiment of this application further provides a chip system, including at least one processor and a communication interface. The communication interface and the at least one processor are interconnected through a line, and the at least one processor is configured to run a computer program or instructions, to perform some or all of the steps described in any one of the method embodiments corresponding to FIG. 4 to FIG. 18. The chip system may include a chip, or may include a chip and another discrete component.

An embodiment of this application further discloses a communication system. The system includes a first device and a second device. For detailed descriptions, refer to the communication methods shown in FIG. 4 to FIG. 18.

It should be understood that the memory mentioned in embodiments of this application may be a volatile memory or a nonvolatile memory, or may include a volatile memory and a nonvolatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and without limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). The memory is any other medium that can carry or store desired program code in a form of an instruction or a data structure and that can be accessed by a computer, but is not limited thereto. The memory in embodiments of this application may alternatively be a circuit or any other apparatus that can implement a storage function, and is configured to store program instructions and/or data.

It should be further understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that, when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification is intended to include but is not limited to these memories and any memory of another appropriate type.

It should be understood that sequence numbers of the foregoing processes do not mean execution sequences in various embodiments of this application. The execution sequences of the processes should be determined based on functions and internal logic of the processes, but should not be construed as any limitation on the implementation processes of embodiments of this application.

Persons of ordinary skill in the art may be aware that units and algorithm steps in the examples described with reference to embodiments provided in this specification can be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this application.

Persons skilled in the art may clearly understand that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The steps of the method in embodiments of this application may be reordered, combined, or removed based on an actual requirement.

The modules/units in the apparatus in embodiments of this application may be combined, divided, and removed based on an actual requirement.

In conclusion, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, comprising:
obtaining, by a first device, first information, wherein the first information comprises sensing information of at least one third device capable of performing sensing switching with a second device; and
sending, by the first device, the first information to the second device.

2. The method according to claim 1, wherein the sensing information comprises at least one of a basic service set identifier BSSID, operating channel information, and whether the third device has a sensing capability.

3. The method according to claim 1 or 2, wherein obtaining, by the first device, the first information comprises:
sending, by the first device, a first frame to the third device, wherein the first frame is used to request sensing switching of the second device; and
receiving, by the first device, a second frame from the third device, wherein the second frame is a response to the first frame, and the second frame comprises sensing information of the third device.

4. The method according to claim 3, wherein the first frame is a sensing switch request frame, and the sensing switch request frame comprises at least one of identification information of the second device, a time for a sensing switch procedure, and the third device serving as a responder or an initiator in a new round of sensing measurement after sensing switching.

5. The method according to claim 4, wherein the sensing switch request frame comprises a first sensing switch parameters element field, the first sensing switch parameters element field comprises a sensing switch identifier field, and the sensing switch identifier field comprises the identification information of the second device.

6. The method according to any one of claims 3 to 5, wherein the second frame is a sensing switch response frame, and the sensing switch response frame comprises at least one of sensing switch success or failure, the sensing information of the third device, location information of the third device, the time for the sensing switching procedure, and the third device serving as a responder or an initiator in a new round of sensing measurement after sensing switching.

7. The method according to claim 6, wherein the sensing switch response frame comprises a status code field, and the status code field indicates sensing switch success or failure.

8. The method according to claim 7, wherein when the status code field indicates sensing switch success, the sensing switch response frame further comprises a second sensing switch parameters element field, and the second sensing switch parameters element field comprises at least one of the sensing information of the third device and the location information of the third device.

9. The method according to claim 8, wherein the second sensing switch parameters element field further comprises at least one of a location information field and a neighbor report element field, wherein the location information field comprises the location information of the third device, and the neighbor report element field comprises the sensing information of the third device.

10. The method according to claim 5 or 9, wherein the first sensing switch parameters element field or the second sensing switch parameters element field further comprises a sensing switch parameters control field, and the sensing switch parameters control field comprises at least one of a sensing switch procedure expiry exponent subfield and a sensing responder subfield, wherein the sensing switch procedure expiry exponent subfield comprises the time for the sensing switch procedure, and the sensing responder subfield indicates that the third device serves as the responder or the initiator in the new round of sensing measurement after sensing switching.

11. The method according to any one of claims 1 to 10, wherein sending, by the first device, the first information to the second device comprises:
sending, by the first device, a third frame to the second device, wherein the third frame comprises the first information.

12. The method according to claim 11, wherein the third frame is a sensing suggestion request frame, and the sensing suggestion request frame comprises at least one of the location information of the third device, whether the third device enables multi-link sensing, the sensing information of the third device, the third device serving as a responder or an initiator in a new round of sensing measurement after sensing switching, and the number of suggested third devices capable of performing sensing switching with the second device.

13. The method according to claim 12, wherein the sensing suggestion request frame comprises a sensing suggestion parameters element field, the sensing suggestion parameters element field comprises a suggested sensing device's information field, and the suggested sensing device's information field comprises at least one of a location information field, an enable multi-link operation MLO and multi-link device MLD parameters field, and a neighbor report element field, wherein the location information field comprises the location information of the third device, the enable MLO and MLD parameters field comprises whether the third device enables multi-link sensing, and the neighbor report element field comprises the sensing information of the third device.

14. The method according to any one of claims 11 to 13, wherein the method further comprises:
receiving, by the first device, a fourth frame from the second device, wherein the fourth frame is a response to the third frame, and the fourth frame comprises at least one of status indication information, the location information of the third device, whether the third device enables multi-link sensing, the sensing information of the third device, the third device serving as a responder or an initiator in a new round of sensing measurement after sensing switching, and the number of suggested third devices capable of performing sensing switching with the second device, wherein the status indication information indicates whether the second device successfully receives the first information.

15. The method according to claim 14, wherein the fourth frame is a sensing suggestion response frame, the sensing suggestion response frame comprises a status code field, and the status code field comprises the status indication information.

16. The method according to claim 15, wherein when the status indication information indicates that the second device successfully receives the first information, the sensing suggestion response frame further comprises a sensing suggestion parameters element field, the sensing suggestion parameters element field comprises a suggested sensing device's information field, and the suggested sensing device's information field comprises at least one of a location information field, an enable MLO and MLD parameters field, and a neighbor report element field, wherein the location information field comprises the location information of the third device, the enable MLO and MLD parameters field comprises whether the third device enables multi-link sensing, and the neighbor report element field comprises the sensing information of the third device.

17. The method according to claim 13 or 16, wherein the sensing suggestion parameters element field further comprises a sensing suggestion parameters control field, and the sensing suggestion parameters control field comprises at least one of a sensing responder subfield and a number of suggested devices subfield, wherein the sensing responder subfield comprises the third device serving as a responder or an initiator in a new round of sensing measurement after sensing switching, and the number of suggested devices subfield comprises the number of suggested third devices capable of performing sensing switching with the second device.

18. The method according to claim 4, wherein the first frame further comprises a first sensing measurement parameter.

19. The method according to claim 18, wherein when the third device does not accept the first sensing measurement parameter, the second frame further comprises a sensing measurement parameters field, the sensing measurement parameters field comprises a second sensing measurement parameter, and the second sensing measurement parameter is determined by the third device.

20. The method according to claim 18 or 19, wherein the first information further comprises a sensing measurement parameter of the third device.

21. The method according to claim 16, wherein the fourth frame further comprises a measurement session identifier indication field, and the measurement session identifier indication field indicates a session for performing measurement with the third device.

22. A communication method, comprising:
receiving, by a second device, first information from a first device, wherein the first information comprises sensing information of at least one third device capable of performing sensing switching with the second device; and
determining, by the second device based on the first information, a target device for sensing switching.

23. The method according to claim 22, wherein the sensing information comprises at least one of a basic service set identifier BSSID of the third device, operating channel information, and whether the third device has a sensing capability.

24. The method according to claim 22 or 23, wherein receiving, by the second device, the first information from the first device comprises:
receiving, by the second device, a third frame from the first device, wherein the third frame comprises the first information.

25. The method according to claim 24, wherein the third frame is a sensing suggestion request frame, and the sensing suggestion request frame comprises at least one of location information of the third device, whether the third device enables multi-link sensing, sensing information of the third device, the third device serving as a responder or an initiator in a new round of sensing measurement after sensing switching, and the number of suggested third devices capable of performing sensing switching with the second device.

26. The method according to claim 25, wherein the sensing suggestion request frame comprises a sensing suggestion parameters element field, the sensing suggestion parameters element field comprises a suggested sensing device's information field, and the suggested sensing device's information field comprises at least one of a location information field, an enable multi-link operation MLO and multi-link device MLD parameters field, and a neighbor report element field, wherein the location information field comprises the location information of the third device, the enable MLO and MLD parameters field comprises whether the third device enables multi-link sensing, and the neighbor report element field comprises the sensing information of the third device.

27. The method according to any one of claims 24 to 26, wherein the method further comprises:
sending, by the second device, a fourth frame to the first device, wherein the fourth frame is a response to the third frame, and the fourth frame comprises at least one of status indication information, the location information of the third device, whether the third device enables multi-link sensing, the sensing information of the third device, the third device serving as a responder or an initiator in a new round of sensing measurement after sensing switching, and the number of suggested third devices capable of performing sensing switching with the second device, wherein the status indication information indicates whether the second device successfully receives the first information.

28. The method according to claim 27, wherein the fourth frame is a sensing suggestion response frame, the sensing suggestion response frame comprises a status code field, and the status code field comprises the status indication information.

29. The method according to claim 28, wherein when the status indication information indicates that the second device successfully receives the first information, the sensing suggestion response frame further comprises a sensing suggestion parameters element field, the sensing suggestion parameters element field comprises a suggested sensing device's information field, and the suggested sensing device's information field comprises at least one of a location information field, an enable MLO and MLD parameters field, and a neighbor report element field, wherein the location information field comprises the location information of the third device, the enable MLO and MLD parameters field comprises whether the third device enables multi-link sensing, and the neighbor report element field comprises the sensing information of the third device.

30. The method according to claim 26 or 29, wherein the sensing suggestion parameters element field further comprises a sensing suggestion parameters control field, and the sensing suggestion parameters control field comprises at least one of a sensing responder subfield and a number of suggested devices subfield, wherein the sensing responder subfield comprises the third device serving as a responder or an initiator in a new round of sensing measurement after sensing switching, and the number of suggested devices subfield comprises the number of suggested third devices capable of performing sensing switching with the second device.

31. The method according to any one of claims 22 to 30, wherein the first information further comprises a sensing measurement parameter of the third device.

32. The method according to claim 27, wherein the fourth frame further comprises a measurement session identifier indication field, and the measurement session identifier indication field indicates a session for performing measurement with the third device.

33. A communication apparatus, comprising:
an obtaining unit, configured to obtain first information, wherein the first information comprises sensing information of at least one third device capable of performing sensing switching with a second device; and
a transceiver unit, configured to send the first information to the second device.

34. The apparatus according to claim 33, wherein the sensing information comprises at least one of a basic service set identifier BSSID of the third device, operating channel information, and whether the third device has a sensing capability.

35. The apparatus according to claim 33 or 34, wherein when obtaining the first information, the obtaining unit is specifically configured to:
send a first frame to the third device, wherein the first frame is used to request sensing switching of the second device; and
receive, by the first device, a second frame from the third device, wherein the second frame is a response to the first frame, and the second frame comprises sensing information of the third device.

36. The apparatus according to claim 35, wherein the first frame is a sensing switch request frame, and the sensing switch request frame comprises at least one of identification information of the second device, a time for a sensing switch procedure, and the third device serving as a responder or an initiator in a new round of sensing measurement after sensing switching.

37. The apparatus according to claim 36, wherein the sensing switch request frame comprises a first sensing switch parameters element field, the first sensing switch parameters element field comprises a sensing switch identifier field, and the sensing switch identifier field comprises the identification information of the second device.

38. The apparatus according to any one of claims 35 to 37, wherein the second frame is a sensing switch response frame, and the sensing switch response frame comprises at least one of sensing switch success or failure, the sensing information of the third device, location information of the third device, the time for the sensing switching procedure, and the third device serving as a responder or an initiator in a new round of sensing measurement after sensing switching.

39. The apparatus according to claim 38, wherein the sensing switch response frame comprises a status code field, and the status code field indicates sensing switch success or failure.

40. The apparatus according to claim 39, wherein when the status code field indicates sensing switch success, the sensing switch response frame further comprises a second sensing switch parameters element field, and the second sensing switch parameters element field comprises at least one of the sensing information of the third device and the location information of the third device.

41. The apparatus according to claim 40, wherein the second sensing switch parameters element field further comprises at least one of a location information field and a neighbor report element field, wherein the location information field comprises the location information of the third device, and the neighbor report element field comprises the sensing information of the third device.

42. The method according to claim 37 or 41, wherein the first sensing switch parameters element field or the second sensing switch parameters element field further comprises a sensing switch parameters control field, and the sensing switch parameters control field comprises at least one of a sensing switch procedure expiry exponent subfield and a sensing responder subfield, wherein the sensing switch procedure expiry exponent subfield comprises the time for the sensing switch procedure, and the sensing responder subfield indicates that the third device serves as the responder or the initiator in the new round of sensing measurement after sensing switching.

43. The apparatus according to any one of claims 33 to 42, wherein when sending the first information to the second device, the transceiver unit is specifically configured to:
send a third frame to the second device, wherein the third frame comprises the first information.

44. The apparatus according to claim 43, wherein the third frame is a sensing suggestion request frame, and the sensing suggestion request frame comprises at least one of the location information of the third device, whether the third device enables multi-link sensing, the sensing information of the third device, the third device serving as a responder or an initiator in a new round of sensing measurement after sensing switching, and the number of suggested third devices capable of performing sensing switching with the second device.

45. The apparatus according to claim 44, wherein the sensing suggestion request frame comprises a sensing suggestion parameters element field, the sensing suggestion parameters element field comprises a suggested sensing device's information field, and the suggested sensing device's information field comprises at least one of a location information field, an enable multi-link operation MLO and multi-link device MLD parameters field, and a neighbor report element field, wherein the location information field comprises the location information of the third device, the enable MLO and MLD parameters field comprises whether the third device enables multi-link sensing, and the neighbor report element field comprises the sensing information of the third device.

46. The apparatus according to any one of claims 43 to 45, wherein the transceiver unit is further configured to receive a fourth frame from the second device, wherein the fourth frame is a response to the third frame, and the fourth frame comprises at least one of status indication information, the location information of the third device, whether the third device enables multi-link sensing, the sensing information of the third device, the third device serving as a responder or an initiator in a new round of sensing measurement after sensing switching, and the number of suggested third devices capable of performing sensing switching with the second device, wherein the status indication information indicates whether the second device successfully receives the first information.

47. The apparatus according to claim 46, wherein the fourth frame is a sensing suggestion response frame, the sensing suggestion response frame comprises a status code field, and the status code field comprises the status indication information.

48. The apparatus according to claim 47, wherein when the status indication information indicates that the second device successfully receives the first information, the sensing suggestion response frame further comprises a sensing suggestion parameters element field, the sensing suggestion parameters element field comprises a suggested sensing device's information field, and the suggested sensing device's information field comprises at least one of a location information field, an enable MLO and MLD parameters field, and a neighbor report element field, wherein the location information field comprises the location information of the third device, the enable MLO and MLD parameters field comprises whether the third device enables multi-link sensing, and the neighbor report element field comprises the sensing information of the third device.

49. The apparatus according to claim 45 or 48, wherein the sensing suggestion parameters element field further comprises a sensing suggestion parameters control field, and the sensing suggestion parameters control field comprises at least one of a sensing responder subfield and a number of suggested devices subfield, wherein the sensing responder subfield comprises the third device serving as a responder or an initiator in a new round of sensing measurement after sensing switching, and the number of suggested devices subfield comprises the number of suggested third devices capable of performing sensing switching with the second device.

50. The apparatus according to claim 36, wherein the first frame further comprises a first sensing measurement parameter.

51. The apparatus according to claim 50, wherein when the third device does not accept the first sensing measurement parameter, the second frame further comprises a sensing measurement parameters field, the sensing measurement parameters field comprises a second sensing measurement parameter, and the second sensing measurement parameter is determined by the third device.

52. The apparatus according to claim 50 or 51, wherein the first information further comprises a sensing measurement parameter of the third device.

53. The apparatus according to claim 48, wherein the fourth frame further comprises a measurement session identifier indication field, and the measurement session identifier indication field indicates a session for performing measurement with the third device.

54. A communication apparatus, comprising:
a transceiver unit, configured to receive first information from a first device, wherein the first information comprises sensing information of at least one third device capable of performing sensing switching with a second device; and
a processing unit, configured to determine, based on the first information, a target device for sensing switching.

55. The apparatus according to claim 54, wherein the sensing information comprises at least one of a basic service set identifier BSSID of the third device, operating channel information, and whether the third device has a sensing capability.

56. The apparatus according to claim 54 or 55, wherein when receiving the first information from the first device, the transceiver unit is specifically configured to:
receive a third frame from the first device, wherein the third frame comprises the first information.

57. The apparatus according to claim 56, wherein the third frame is a sensing suggestion request frame, and the sensing suggestion request frame comprises at least one of location information of the third device, whether the third device enables multi-link sensing, sensing information of the third device, the third device serving as a responder or an initiator in a new round of sensing measurement after sensing switching, and the number of suggested third devices capable of performing sensing switching with the second device.

58. The apparatus according to claim 57, wherein the sensing suggestion request frame comprises a sensing suggestion parameters element field, the sensing suggestion parameters element field comprises a suggested sensing device's information field, and the suggested sensing device's information field comprises at least one of a location information field, an enable multi-link operation MLO and multi-link device MLD parameters field, and a neighbor report element field, wherein the location information field comprises the location information of the third device, the enable MLO and MLD parameters field comprises whether the third device enables multi-link sensing, and the neighbor report element field comprises the sensing information of the third device.

59. The apparatus according to any one of claims 56 to 58, wherein the transceiver unit is further configured to send a fourth frame to the first device, wherein the fourth frame is a response to the third frame, and the fourth frame comprises at least one of status indication information, the location information of the third device, whether the third device enables multi-link sensing, the sensing information of the third device, the third device serving as a responder or an initiator in a new round of sensing measurement after sensing switching, and the number of suggested third devices capable of performing sensing switching with the second device, wherein the status indication information indicates whether the second device successfully receives the first information.

60. The apparatus according to claim 59, wherein the fourth frame is a sensing suggestion response frame, the sensing suggestion response frame comprises a status code field, and the status code field comprises the status indication information.

61. The apparatus according to claim 60, wherein when the status indication information indicates that the second device successfully receives the first information, the sensing suggestion response frame further comprises a sensing suggestion parameters element field, the sensing suggestion parameters element field comprises a suggested sensing device's information field, and the suggested sensing device's information field comprises at least one of a location information field, an enable MLO and MLD parameters field, and a neighbor report element field, wherein the location information field comprises the location information of the third device, the enable MLO and MLD parameters field comprises whether the third device enables multi-link sensing, and the neighbor report element field comprises the sensing information of the third device.

62. The apparatus according to claim 58 or 61, wherein the sensing suggestion parameters element field further comprises a sensing suggestion parameters control field, and the sensing suggestion parameters control field comprises at least one of a sensing responder subfield and a number of suggested devices subfield, wherein the sensing responder subfield comprises the third device serving as a responder or an initiator in a new round of sensing measurement after sensing switching, and the number of suggested devices subfield comprises the number of suggested third devices capable of performing sensing switching with the second device.

63. The apparatus according to any one of claims 54 to 62, wherein the first information further comprises a sensing measurement parameter of the third device.

64. The apparatus according to claim 59, wherein the fourth frame further comprises a measurement session identifier indication field, and the measurement session identifier indication field indicates a session for performing measurement with the third device.

65. A communication apparatus, comprising:
a memory, configured to store a computer program; and
a processor, configured to execute the computer program, so that the communication apparatus performs the method according to any one of claims 1 to 21 or the method according to any one of claims 22 to 32.

66. A computer-readable storage medium, wherein the computer-readable storage medium stores a computer program or computer instructions, and when the computer program or the computer instructions are executed by a processor, a communication apparatus comprising the processor is caused to perform the method according to any one of claims 1 to 21 or the method according to any one of claims 22 to 32.

67. A computer program product comprising program instructions, wherein when the program instructions are run on a computer, the method according to any one of claims 1 to 21 is implemented, or the method according to any one of claims 22 to 32 is implemented.

68. A chip system, comprising at least one processor, a memory, and an interface circuit, wherein the memory, the interface circuit, and the at least one processor are interconnected by using a line, the at least one memory stores instructions, and when the instructions are executed by the processor, a communication apparatus comprising the chip system is caused to perform the method according to any one of claims 1 to 21 or the method according to any one of claims 22 to 32.

69. A communication system, comprising a first device and a second device, wherein the first device is configured to perform the method according to any one of claims 1 to 21, and the second device is configured to perform the method according to any one of claims 22 to 32.
